(19) Europäisches Patentamt / European Patent Office / Office européen des brevets

(11) **EP 4 485 067 A1**

(12) **EUROPEAN PATENT APPLICATION**
published in accordance with Art. 153(4) EPC

(43) Date of publication:
01.01.2025 Bulletin 2025/01

(21) Application number: 23759643.2

(22) Date of filing: 03.02.2023

(51) International Patent Classification (IPC):
*G03B 21/00* (2006.01)   *G03B 21/14* (2006.01)
*F21V 23/00* (2015.01)   *F21Y 113/10* (2016.01)
*F21Y 115/30* (2016.01)   *F21S 2/00* (2016.01)
*H05B 47/105* (2020.01)   *H05B 47/155* (2020.01)
*H05B 47/16* (2020.01)   *H05B 47/165* (2020.01)
*H05B 47/17* (2020.01)   *H04N 5/74* (2006.01)
*H04N 9/31* (2006.01)

(52) Cooperative Patent Classification (CPC):
**F21S 2/00; F21V 23/00; G03B 21/00; G03B 21/14;**
**H04N 5/74; H04N 9/31; H05B 47/105;**
**H05B 47/155; H05B 47/16; H05B 47/165;**
**H05B 47/17;** F21Y 2113/10; F21Y 2115/30

(86) International application number:
**PCT/JP2023/003591**

(87) International publication number:
**WO 2023/162637 (31.08.2023 Gazette 2023/35)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 24.02.2022 JP 2022026668

(71) Applicant: **Sony Group Corporation**
**Tokyo 108-0075 (JP)**

(72) Inventor: **OHKAWA, Shingo**
**Tokyo 108-0075 (JP)**

(74) Representative: **D Young & Co LLP**
**3 Noble Street**
**London EC2V 7BQ (GB)**

(54) **LIGHTING DEVICE AND PROJECTOR DEVICE**

(57)    In a case where a reproduction image of each wavelength band is obtained by performing spatial light phase modulation on a plurality of light beams of different wavelength bands, the present technology improves luminance of the reproduction image while reducing a size and cost of an optical system.

A lighting device according to the present technology includes: a light emitting unit that emits a plurality of light beams of different wavelength bands; a phase modulator that performs spatial light phase modulation on incident light beams from the light emitting unit and in which the light beams of the different wavelength bands are incident from the light emitting unit on respective phase modulation areas that are areas into which a phase modulation surface on which the spatial light phase modulation is performed is divided; and a control unit that simultaneously executes the spatial light phase modulation in the phase modulation areas in a state in which the light beams of the corresponding wavelength bands are incident on the respective phase modulation areas.

FIG. 1

1 (LIGHTING DEVICE)

**Description**

TECHNICAL FIELD

The present technology relates to a lighting device and a projector device, and particularly relates to a lighting device and a projector device that generate a reproduction image having a desired light intensity distribution by performing spatial light phase modulation on incident light from a light emitting unit.

BACKGROUND ART

In recent years, technologies for increasing a dynamic range have been proposed in the field of image display devices, and, in particular, a high dynamic range (HDR) standard has attracted attention. The HDR standard is a standard for expanding gradation representation of a low luminance portion and achieving high peak luminance.

Patent Document 1 below discloses a technology of using a laser light source and a spatial light phase modulator (hereinafter, referred to as a "phase modulator") for modulating a phase of light to steer a light beam emitted from the laser light source in accordance with an image signal and collecting light of a dark object to a bright object to generate projector illumination light in accordance with a luminance distribution of an image. This proposes a method for achieving an image having a wide dynamic range by causing the illumination light to enter a spatial light intensity modulator (hereinafter, referred to as an "intensity modulator") such as a digital micromirror device (DMD).

It can be said that the above method of causing the illumination light generated by the phase modulator to enter the intensity modulator aims at producing a similar effect to that of, for example, performing area division driving of a backlight in a liquid crystal television (television receiver).

Here, in a case where full-color HDR display is performed by using the phase modulator, it is conceivable to use three plates for R, G, and B as the phase modulator or to perform time-division driving for each color by using a single plate as the phase modulator.

Patent Document 2 below discloses a technology of performing RGB spatial light modulation by time division.

CITATION LIST

PATENT DOCUMENT

Patent Document 1: Japanese Unexamined Patent Application Publication No. 2018-532152
Patent Document 2: Japanese Patent Application Laid-Open No. 2021-26195

SUMMARY OF THE INVENTION

PROBLEMS TO BE SOLVED BY THE INVENTION

However, in a case where spatial light modulation for each color is performed by time division, it is necessary to cause light of each color to enter the spatial light modulator by time division for each frame period, and thus a light emission period of the light of each color is reduced. This leads to decrease in luminance.

Meanwhile, in a case where the spatial light modulator is provided for each color, a decrease in luminance can be avoided unlike the case of time-division driving. However, providing the spatial light modulator for each color increases the number of components and promotes an increase in size and cost of an optical system.

The present technology has been made in view of the above circumstances, and an object thereof is to improve luminance of a reproduction image of each wavelength band while reducing a size and cost of an optical system in a case where the reproduction image is obtained by performing spatial light phase modulation on a plurality of light beams of different wavelength bands.

SOLUTIONS TO PROBLEMS

A lighting device according to the present technology includes: a light emitting unit that emits a plurality of light beams of different wavelength bands; a phase modulator that performs spatial light phase modulation on incident light beams from the light emitting unit and in which the light beams of the different wavelength bands are incident from the light emitting unit on respective phase modulation areas that are areas into which a phase modulation surface on which the spatial light phase modulation is performed is divided; and a control unit that simultaneously executes the spatial light phase modulation in the phase modulation areas in a state in which the light beams of the corresponding wavelength bands are incident on the respective phase modulation areas.

The term "simultaneously" here does not only mean that execution periods of spatial light phase modulation in the respective phase modulation areas completely match with each other, but means that it is only necessary to satisfy at least a condition that there is a period in which the spatial light phase modulation is performed in all the phase modulation areas. That is, if the condition is satisfied, an execution start timing and execution end timing of the spatial light phase modulation may be different between a certain phase modulation area and another phase modulation area. According to the above configuration, for example, in a case where images by the light beams of the different wavelength bands such as R light, G light, and B light are combined on a predetermined reproduction surface to obtain a reproduction image, it is unnecessary to perform the spatial light phase modulation on the light beams of the respective wavelength bands by time division.

Further, a projector device according to the present technology includes: a light emitting unit that emits a plurality of light beams of different wavelength bands; a phase modulator that performs spatial light phase modulation on incident light beams from the light emitting unit and in which the light beams of the different wavelength bands are incident from the light emitting unit on respective phase modulation areas that are areas into which a phase modulation surface on which the spatial light phase modulation is performed is divided; an intensity modulator that performs spatial light intensity modulation on the light beams incident via the phase modulator; a projection lens that projects the light beams subjected to the spatial light intensity modulation by the intensity modulator on a projection surface; and a control unit that simultaneously executes the spatial light phase modulation in the phase modulation areas in a state in which the light beams of the corresponding wavelength bands are incident on the respective phase modulation areas.

Such a projector device can also have functions and effects similar to those of the lighting device in the above embodiment.

BRIEF DESCRIPTION OF DRAWINGS

Fig. 1 shows a configuration example of a lighting device in a first embodiment.
Fig. 2 is an explanatory diagram of a principle of image reproduction by spatial light phase modulation.
Fig. 3 is an explanatory diagram of an area division example of a phase modulation surface.
Fig. 4 shows an output image of a reproduction image for each area in an embodiment.
Fig. 5 is an explanatory diagram of a coordinate system of a phase modulatable region and a domain on a phase modulation surface and a coordinate system of an irradiation region on an intensity modulation surface.
Fig. 6 schematically shows a relationship between a phase distribution of an entire phase modulatable region and an intensity distribution achieved by the phase distribution in an irradiation region.
Fig. 7 schematically shows a relationship between a phase distribution of a domain and an intensity distribution achieved by the phase distribution in an irradiation region.
Fig. 8 is an explanatory diagram of addition of lens components to a scaled phase distribution.
Fig. 9 is an explanatory diagram of a control method for generating a full-color reproduction image in the first embodiment.
Fig. 10 shows a configuration example of a control unit included in the lighting device in the first embodiment.
Fig. 11 is an explanatory diagram of color balance adjustment in an embodiment.
Fig. 12 shows a configuration example of a projector device in a second embodiment.
Fig. 13 is an explanatory diagram of a control method for image reproduction in the second embodiment.
Fig. 14 shows a configuration example of a control unit included in the projector device in the second embodiment.
Fig. 15 shows a relationship between a drive signal value of a phase modulator and an amount of phase modulation for each of R, G, and B colors.
Fig. 16 is an explanatory diagram of drive signal value compression processing.
Fig. 17 shows a configuration example of a control unit included in a projector device in a third embodiment.
Fig. 18 is an image diagram of a reproduction image in which color mixing occurs.
Fig. 19 is an explanatory diagram of a luminance-prioritized mode and a color mixing suppression mode.
Fig. 20 shows a configuration example of a control unit included in a projector device in a fourth embodiment.
Fig. 21 schematically shows a relationship between 0th order light of a phase modulator and a reproduction image in a case where an image of each wavelength band is superimposed on the same region around an optical axis on a reproduction surface.
Fig. 22 is an explanatory diagram of a method of offsetting a reproduction image in a fifth embodiment.
Fig. 23 is an explanatory diagram of spatial light phase modulation for offsetting an irradiation region of a reproduction image.
Fig. 24 shows a configuration example of a projector device in the fifth embodiment.

Fig. 25 is an explanatory diagram of another example of a method of offsetting a reproduction image.

Fig. 26 is an explanatory diagram of a modification example of the fifth embodiment.

Fig. 27 shows a configuration example of a projector device in the modification example of the fifth embodiment.

Fig. 28 shows a state of a luminous flux of each wavelength band in a case where an optical axis of incident light on a phase modulator deviates.

Fig. 29 shows a configuration example of a control unit included in a projector device in a sixth embodiment.

Fig. 30 is an explanatory diagram of input image shift processing in an image shift unit.

Fig. 31 is an explanatory diagram of an example of a test projection image.

Fig. 32 shows a test projection image projected on a projection surface in a case where an optical axis of incident light deviates.

Fig. 33 is an explanatory diagram of phase modulation pattern shift processing for cancelling a deviation of an optical axis.

Fig. 34 shows a configuration example of a control unit included in a projector device in a modification example of the sixth embodiment.

Fig. 35 shows an image of random noise generated in a reproduction image and an image of a projection image in which noise caused by the random noise is generated.

Fig. 36 shows a configuration example of a projector device in a seventh embodiment.

Fig. 37 is an explanatory diagram of an effect by defocusing a reproduction image.

MODE FOR CARRYING OUT THE INVENTION

Hereinafter, embodiments according to the present technology will be described in the following order with reference to the accompanying drawings.

<1. First Embodiment>

(1-1. Overview of Configuration of Lighting Device)
(1-2. Phase Modulation)
(1-3. Control Method and Configuration of Control Unit in First Embodiment)
(1-4. Color Balance Adjustment)

<2. Second Embodiment>
<3. Third Embodiment>
<4. Fourth Embodiment>
<5. Fifth Embodiment>
<6. Sixth Embodiment>
<7. Seventh Embodiment>
<8. Modification Examples>
<9. Summary of Embodiments>
<10. Present Technology>

<1. First Embodiment>

(1-1. Overview of Configuration of Lighting Device)

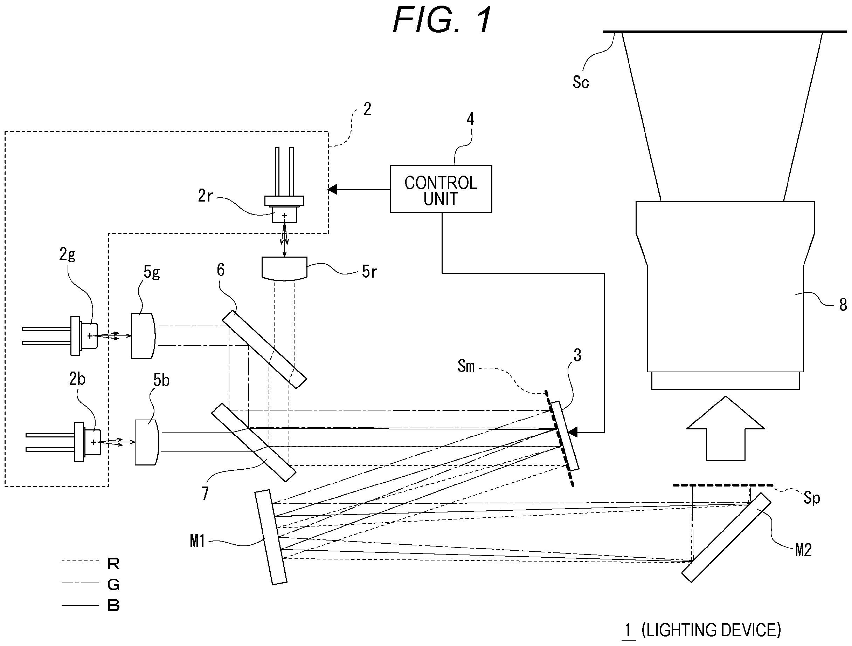

Fig. 1 shows a configuration example of a lighting device 1 in one embodiment of a lighting device according to the present technology.

As shown in the drawing, the lighting device 1 includes a light emitting unit 2 that emits a plurality of light beams of different wavelength bands, a phase modulator 3 that performs spatial light phase modulation on incident light from the light emitting unit 2, and a control unit 4 that performs light emission control of the light emitting unit 2 and drive control of the phase modulator 3 and also includes a plurality of collimation lenses 5 (5r, 5g, and 5b), a first dichroic mirror 6, a second dichroic mirror 7, a first mirror M1, a second mirror M2, and a projection lens 8.

In the lighting device 1, a reflective liquid crystal panel is used as the phase modulator 3. The phase modulator 3 performs spatial light phase modulation on incident light from the light emitting unit 2, thereby reproducing a desired image (light intensity distribution) on a predetermined reproduction surface Sp.

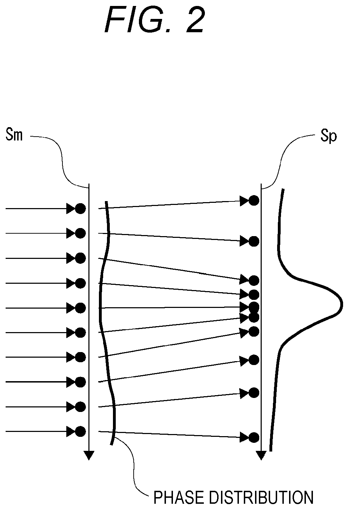

Here, for confirmation, a principle of image reproduction by spatial light phase modulation will be described with reference to Fig. 2.

Fig. 2 schematically shows a relationship among each light beam incident on a phase modulation surface Sm of the phase modulator 3, a wavefront of a phase distribution in the phase modulator 3, each light beam subjected to phase modulation, and a light intensity distribution formed on the reproduction surface Sp by each light beam subjected to the phase modulation.

First, as an assumption, the wavefront of the phase distribution in the phase modulator 3 draws a smooth curve as shown in the drawing by using a freeform method. By the spatial light phase modulation in the phase modulator 3, each incident light beam is refracted to travel in a normal direction of the wavefront of the phase distribution. With this refraction, a portion where a light beam density increases and a portion where the light beam density becomes sparse are formed on the reproduction surface Sp, thereby forming a light intensity distribution on the reproduction surface Sp.

According to such a principle, it is possible to reproduce a desired image on the reproduction surface Sp by a pattern of the phase distribution set in the phase modulator 3.

Here, image reproduction can be performed by spatial light intensity modulation instead of spatial light phase modulation, but, in the spatial light intensity modulation, a part of incident light is shielded or attenuated by using, for example, a digital micromirror device (DMD) or a liquid crystal panel. Thus, light utilization efficiency is low, and it is difficult to achieve high contrast. When image reproduction is performed by the spatial light phase modulation as described above, it is possible to collect light of a dark object to be shielded or attenuated to a bright object, and thus it is possible to improve the light utilization efficiency and achieve high contrast (expand a dynamic range).

In Fig. 1, the light emitting unit 2 functions as a light source of incident light on the phase modulator 3. In the present example, the light emitting unit 2 includes light emitting elements 2r, 2g, and 2b that each emit light of different colors. The light emitting element 2r emits red (R) light, the light emitting element 2g emits green (G) light, and the light emitting element 2b emits blue (B) light.

In the present example, for example, a semiconductor laser is used for the light emitting elements 2r, 2g, and 2b.

Here, in the drawing, luminous fluxes of R light, G light, and B light are indicated by a dotted line, an alternate long and short dash line, and a solid line, respectively.

Note that the configuration including one light emitting element 2r, 2g, and 2b is shown here, but the light emitting unit 2 can include two or more light emitting elements 2r, 2g, and 2b.

As shown in the drawing, R light emitted from the light emitting element 2r is incident on a front surface of the first dichroic mirror 6 via the collimation lens 5r, and G light emitted from the light emitting element 2g is incident on a back surface of the first dichroic mirror 6 via the collimation lens 5g.

The first dichroic mirror 6 has a characteristic of transmitting R light and reflecting G light. That is, the R light incident from the light emitting element 2r via the collimation lens 5r is transmitted through the first dichroic mirror 6, and the G light incident from the light emitting element 2g via the collimation lens 5g is reflected by the back surface of the first dichroic mirror 6. As shown in the drawing, the R light transmitted through the first dichroic mirror 6 and the G light reflected by the back surface of the first dichroic mirror 6 are both incident on a front surface of the second dichroic mirror 7.

B light emitted from the light emitting element 2b is incident on a back surface of the second dichroic mirror 7 via the collimation lens 5b.

The second dichroic mirror 7 has a characteristic of reflecting R light and G light and transmitting B light. Therefore, the R light and the G light incident from the first dichroic mirror 6 are reflected by the front surface of the second dichroic mirror 7, and the B light incident from the light emitting element 2b via the collimation lens 5b is transmitted through the second dichroic mirror 7.

In the lighting device 1, the R light, the G light, and the B light are emitted from the front surface of the second dichroic mirror 7 such that luminous fluxes thereof are parallel to each other. Further, in the lighting device 1, the R light, the G light, and the B light emitted from the front surface of the second dichroic mirror 7 in this manner are incident on different areas on the phase modulation surface Sm of the phase modulator 3.

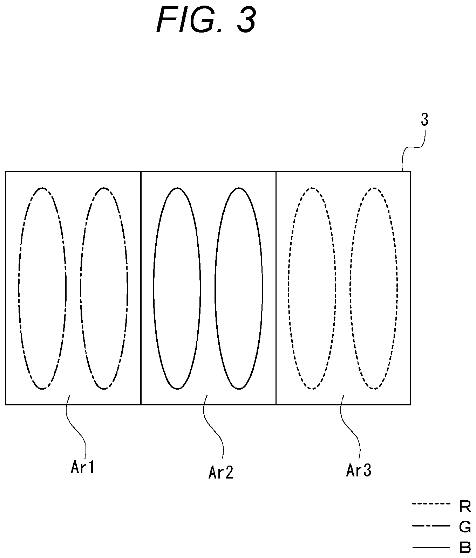

Fig. 3 is an explanatory diagram of an area division example of the phase modulation surface Sm.

In the present example, the phase modulation surface Sm is divided into three areas (phase modulation areas) Ar to handle three light beams of R light, G light, and B light as a plurality of light beams of different wavelength bands. Those three areas Ar will be referred to as a first area Ar1, a second area Ar2, and a third area Ar3. In the present example, an effective pixel region of the phase modulator 3 that is the liquid crystal panel, that is, a region where spatial light phase modulation can be performed on incident light (hereinafter, referred to as a "phase modulatable region") has a rectangular shape, and the division of the areas Ar is performed to divide the phase modulatable region into three equal parts in a longitudinal direction.

A surface on which the R light, the G light, and the B light from the second dichroic mirror 7 are incident is defined as a front surface of the phase modulator 3. The area Ar located on the leftmost side when facing the front surface is defined as a first area Ar1, the area Ar on the right side thereof is defined as a second area Ar2, and the area Ar on the further right side thereof is defined as a third area Ar3.

As shown in the drawing, in the present example, the G light is incident on the first area Ar1, the B light is incident on the second area Ar2, and the R light is incident on the third area Ar3.

Fig. 3 shows an example where two light emitting elements 2r, 2g, and 2b are provided in the light emitting unit 2, and two luminous fluxes of light of the corresponding color are incident on each area Ar.

Here, as can be seen with reference to Fig. 1, in the lighting device 1, an optical system is designed such that the luminous fluxes of the R light, the G light, and the B light emitted from the front surface of the second dichroic mirror 7 do not overlap and are arranged in parallel. Further, in the optical system in this case, arrangement of the R light, the G light, and the B light incident on the phase modulator 3 is designed such that the G light is incident on the first area Ar1, the B light is incident on the second area Ar2, and the R light is incident on the third area Ar3 as described above.

Here, in order to form a full-color reproduction image on the predetermined reproduction surface Sp by using R light, G light, and B light, spatial light phase modulation based on an input image of the corresponding color is performed in the first area Ar1, the second area Ar2, and the third area Ar3. At this time, in a case where only spatial light phase modulation for reproducing a light intensity distribution according to the input image is performed in each area Ar, luminous fluxes of the respective colors are output in parallel from the phase modulator 3, and images of the respective colors are emitted to different regions on the reproduction surface Sp. In this case, the full-color reproduction image cannot be appropriately obtained.

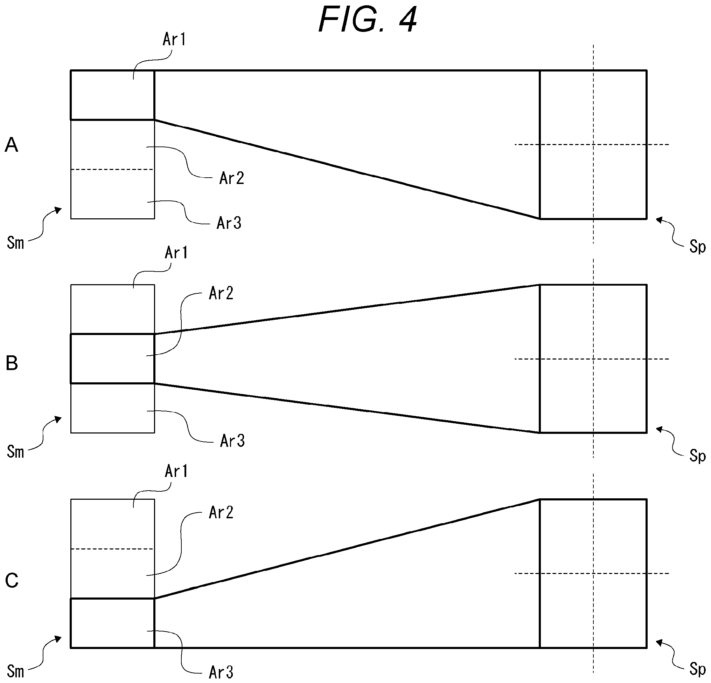

Fig. 4 shows an output image of an image for each area Ar.

In order to obtain an appropriate full-color reproduction image, as shown in Figs. 4A to 4C, it is necessary to superimpose images of the respective colors on the same region on the reproduction surface Sp and not to cause crosstalk in a spatial direction.

For this purpose, the spatial light phase modulation is performed in each area Ar so as to give a lens component for changing an emission direction of a luminous flux from each area Ar and a shape and size of the luminous flux (from the luminous flux before incident on each area Ar).

Note that details of the spatial light phase modulation to be performed in each area Ar including the lens component will be described later.

In Fig. 1, the R light, G light, and B light subjected to the spatial light phase modulation in the corresponding areas Ar of the phase modulator 3 are reflected by the first mirror M1 and then reflected by the second mirror M2. In the present example, the reproduction surface Sp is set as a position between the second mirror M2 and the projection lens 8 in an optical path from the light emitting unit 2. The images of the respective colors generated by the spatial light phase modulation in the areas Ar of the phase modulator 3 are superimposed on the reproduction surface Sp, and thus a full-color reproduction image is formed.

In the lighting device 1, the reproduction image formed on the reproduction surface Sp in this manner is enlarged and projected on a predetermined projection surface such as a front surface of a screen Sc by the projection lens 8.

(1-2. Phase Modulation)

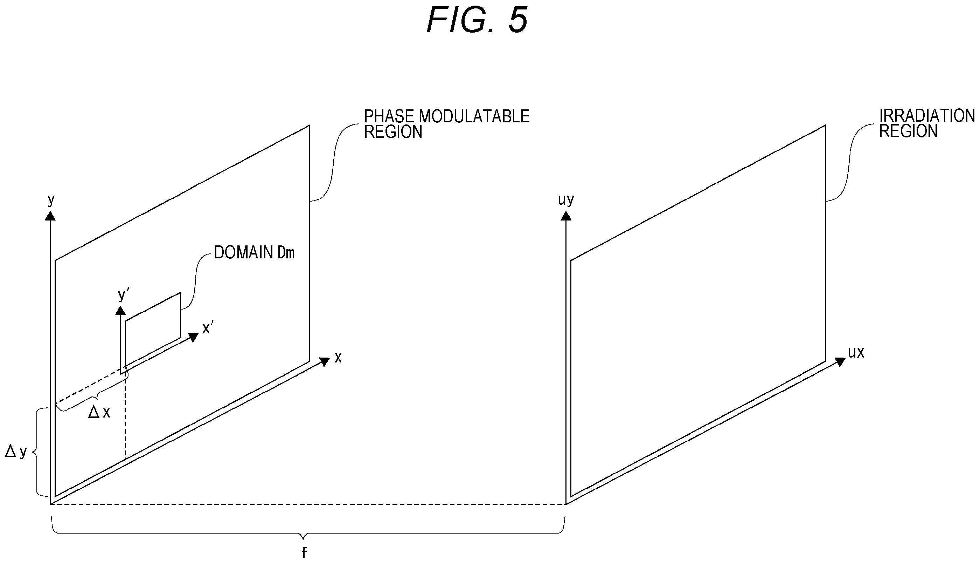

Here, a method of deriving a phase modulation pattern for reproducing a desired light intensity distribution on the reproduction surface Sp including the lens component described above will be described with reference to Figs. 5 to 8.

First, the freeform method is known as a method of obtaining a phase distribution for reproducing a target light intensity distribution. The freeform method is a general term for a method of obtaining a phase distribution for reproducing a desired image on the basis of ray optics.

Hereinafter, a method for obtaining a phase distribution for each area Ar on the basis of the freeform method will be described. Note that a concept of "domain Dm" is used in the following description, and this is a concept corresponding to "area Ar".

As shown in Fig. 5, here, for convenience of description, a coordinate system (x, y) is defined in the phase modulatable region on the phase modulation surface Sm, a coordinate system (x', y') is defined in the domain Dm of the phase modulation surface, and a coordinate system (ux, uy) is defined in an irradiation region (region where a reproduction image is emitted) on the reproduction surface Sp. Further, a shift amount of a position of the domain Dm with respect to the phase modulatable region is set to ($\Delta$x, $\Delta$y), and an area reduction magnification of the domain Dm with respect to the phase modulatable region is set to r (r > 2). Furthermore, a distance between the phase modulation surface Sm and the reproduction surface Sp is set to f.

A phase distribution P in which light beams are associated one-to-one from the entire phase modulatable region to the irradiation region is obtained by the freeform method. A refraction effect that a light beam incident on a point (x, y) = ($x_1$, $y_1$) on the phase modulatable region receives from the phase distribution P is determined on the basis of a gradient vector of the phase distribution P at the point (x, y) = ($x_1$, $y_1$),

[Math. 1]

$$\left.\left(\frac{\partial P}{\partial x},\ \frac{\partial P}{\partial y}\right)\right|_{x=x_1,\ y=y_1} \quad \text{...} \quad \text{[EQUATION 1]}$$

and a displacement in an in-plane direction between a point (ux, uy) = (ux$_1$, uy$_1$) at which the light beam penetrates the reproduction surface Sp and the point (x, y) = (x$_1$, y$_1$) on the phase modulation surface Sm is given by the following [Equation 2] as the product of the gradient vector and the distance f.

[Math. 2]

$$\begin{pmatrix} ux_1 \\ uy_1 \end{pmatrix} - \begin{pmatrix} x_1 \\ y_1 \end{pmatrix} = f \cdot \begin{pmatrix} \frac{\partial P}{\partial x} \\ \frac{\partial P}{\partial y} \end{pmatrix}\Bigg|_{x=x_1,\ y=y_1} \quad \dots \text{[EQUATION 2]}$$

Therefore, a correspondence relationship between a point at which a certain light beam subjected to the refraction effect by the phase distribution P penetrates the phase modulation surface Sm and a point at which the light beam penetrates the reproduction surface Sp is given by the following [Equation 3].

[Math. 3]

$$\begin{pmatrix} ux(x,y) \\ uy(x,y) \end{pmatrix} = \begin{pmatrix} x \\ y \end{pmatrix} + f \cdot \begin{pmatrix} \frac{\partial P}{\partial x} \\ \frac{\partial P}{\partial y} \end{pmatrix}\Bigg|_{x,y} \quad \dots \text{[EQUATION 3]}$$

The phase distribution to be given on the domain Dm will be referred to as "P'".

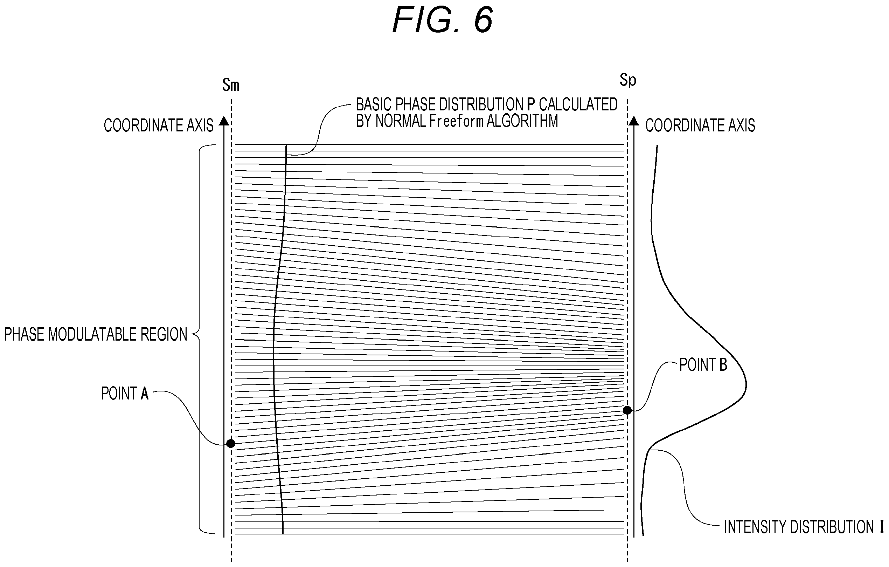

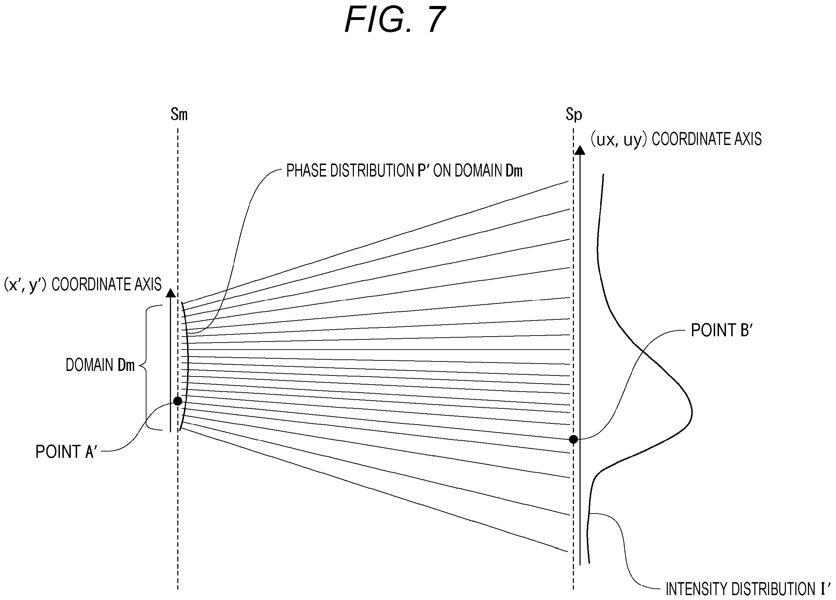

As shown in Figs. 6 and 7, an intensity distribution achieved in the irradiation region by the phase distribution P refracting light beams incident on the entire phase modulatable region will be denoted by "I", and an intensity distribution achieved in the irradiation region by the phase distribution P' refracting light beams incident on the domain Dm will be denoted by "I'". A condition to be satisfied by the phase distribution P' is that the intensity distribution I and the intensity distribution I' match.

Here, as shown in Fig. 7, any point on the domain Dm is set as a point A', and its coordinates are set as (x', y') = (s$_x$, s$_y$). Further, a point at which the light beam subjected to the refraction effect by the phase distribution P' at the point A' penetrates the reproduction surface Sp is defined as a point B'.

Further, as shown in Fig. 6, a point on the phase modulatable region in the correspondence relationship of the coordinates (x, y) = (r · s$_x$, r · s$_y$) with the point A' is defined as a point A, and a point at which the light beam subjected to the refraction effect by the phase distribution P at the point A penetrates the reproduction surface Sp is defined as a point B.

In order to match the intensity distribution I and the intensity distribution I', it is only necessary to determine the phase distribution P' so as to match the point B and the point B'. In a case where the phase distribution P' satisfying such a condition exists, as described in [Equation 2], the product of the gradient vector of the phase distribution P' at the point A' and the distance f matches with a displacement in the in-plane direction between the point B and the point A', and coordinates of the point B are shown as follows by using the expression on the left side of [Equation 3],

[Math. 4]

$$\begin{pmatrix} ux \\ uy \end{pmatrix} = \begin{pmatrix} ux(x,y) \\ uy(x,y) \end{pmatrix}\Bigg|_{x=r \cdot s_x,\ y=r \cdot s_y} \quad \dots \text{[EQUATION 4]}$$

and, when it is noted that the coordinates of the point A' in the (x, y) coordinate system are (x, y) = (s$_x$ + Δx, s$_y$ + Δy), the following [Equation 5] is obtained as a conditional expression to be satisfied by the phase distribution P'.

[Math. 5]

$$f \cdot \left. \begin{pmatrix} \frac{\partial P'}{\partial x'} \\ \frac{\partial P'}{\partial y'} \end{pmatrix} \right|_{x'=s_x,\ y'=s_y} = \left. \begin{pmatrix} ux(x,y) \\ uy(x,y) \end{pmatrix} \right|_{x=r \cdot s_x,\ y=r \cdot s_y} - \begin{pmatrix} s_x + \Delta x \\ s_y + \Delta y \end{pmatrix}$$

$$\ldots \text{[EQUATION 5]}$$

When [Equation 3] is used, [Equation 5] is rewritten as the following [Equation 6].
[Math. 6]

$$\left. \begin{pmatrix} \frac{\partial P'}{\partial x'} \\ \frac{\partial P'}{\partial y'} \end{pmatrix} \right|_{x'=s_x,\ y'=s_y} = \left. \begin{pmatrix} \frac{\partial P}{\partial x} \\ \frac{\partial P}{\partial y} \end{pmatrix} \right|_{x=r \cdot s_x,\ y=r \cdot s_y} + \frac{1}{f} \cdot \begin{pmatrix} (r-1) \cdot s_x - \Delta x \\ (r-1) \cdot s_y - \Delta y \end{pmatrix}$$

$$\ldots \text{[EQUATION 6]}$$

Here, because the point A' is any point on the domain Dm, a conditional expression such as the following [Equation 7] is obtained by rewriting $(s_x, s_y)$ as $(x', y')$ in [Equation 6].
[Math. 7]

$$\left. \begin{pmatrix} \frac{\partial P'}{\partial x'} \\ \frac{\partial P'}{\partial y'} \end{pmatrix} \right|_{x',y'} = \left. \begin{pmatrix} \frac{\partial P}{\partial x} \\ \frac{\partial P}{\partial y} \end{pmatrix} \right|_{x=r \cdot x',\ y=r \cdot y'} + \frac{1}{f} \cdot \begin{pmatrix} (r-1) \cdot x' - \Delta x \\ (r-1) \cdot y' - \Delta y \end{pmatrix}$$

$$\ldots \text{[EQUATION 7]}$$

When a rotation field regarding $(x', y')$ on the right side of [Equation 7] is calculated, the following [Equation 8] is obtained.
[Math. 8]

$$\begin{pmatrix} \frac{\partial}{\partial x'} \\ \frac{\partial}{\partial y'} \end{pmatrix} \times \left\{ \left. \begin{pmatrix} \frac{\partial P}{\partial x} \\ \frac{\partial P}{\partial y} \end{pmatrix} \right|_{x=r \cdot x',\ y=r \cdot y'} + \frac{1}{f} \cdot \begin{pmatrix} (r-1) \cdot x' - \Delta x \\ (r-1) \cdot y' - \Delta y \end{pmatrix} \right\} = r \cdot \begin{pmatrix} \frac{\partial}{\partial x} \\ \frac{\partial}{\partial y} \end{pmatrix} \times \left. \begin{pmatrix} \frac{\partial P}{\partial x} \\ \frac{\partial P}{\partial y} \end{pmatrix} \right|_{x=r \cdot x',\ y=r \cdot y'}$$

$$\ldots \text{[EQUATION 8]}$$

Here, the phase distribution P is a known scalar field on $(x, y)$, and a rotation field of a gradient field thereof is zero for any $(x, y)$. Thus, [Equation 8] eventually becomes zero. In general, a necessary and sufficient condition for existence of a scalar field that gives a certain vector field as a gradient field is that a rotation field of the vector field becomes zero everywhere. Thus, the fact that the rotation field on the right side of the conditional expression of [Equation 7] becomes zero indicates that the phase distribution P' satisfying [Equation 7], that is, the phase distribution P' that gives the right side of [Equation 7] as the gradient field certainly exists. Therefore, a value of the phase distribution P' at any point $(x', y') = (s_x, s_y)$ on the domain Dm can be configured as follows by performing line integral on the right side of [Equation 7].

[Math. 9]

$$\left. P' \right|_{x'=s_x,\ y'=s_y} = \int_{t=0}^{t=s_x} \left. \frac{\partial P'}{\partial x'} \right|_{x'=t,\ y'=0} dt + \int_{t=0}^{t=y_x} \left. \frac{\partial P'}{\partial y'} \right|_{x'=s_x,\ y'=t} dt \quad \ldots \text{[EQUATION 9]}$$

$$= \frac{1}{r} \cdot \left. P \right|_{x=r \cdot s_x,\ y=r \cdot s_y} + \frac{1}{2} \cdot \frac{r-1}{f} \cdot \left( s_x^2 + s_y^2 \right) - \frac{\Delta x \cdot s_x + \Delta y \cdot s_y}{f} \quad \ldots \text{[EQUATION 10]}$$

The first term in [Equation 10] above indicates a component obtained by scaling the phase distribution P with a reduction magnification r in both the spatial direction and a phase direction, and the second and third terms indicate lens components determined depending on the position of the domain Dm. Therefore, in order to calculate the phase distribution P' of each divided area Ar, it is only necessary to first perform scaling in the spatial direction and the phase direction on the phase distribution P obtained by the freeform method, add a lens component corresponding to the position to the scaled phase distribution for each domain Dm, and allocate the phase distribution as the phase distribution P' of each domain Dm.

In this manner, it is possible to reproduce each light intensity distribution in the same region on the reproduction surface Sp without shifting a position of the reproduction image from each domain Dm.

Hereinafter, the phase distribution P obtained for the entire phase modulatable region for an image of a certain color will be referred to as a "basic phase distribution Dpr". Further, a phase distribution obtained by performing scaling in the spatial direction and the phase direction according to a size of the domain Dm on the basic phase distribution Dpr will be referred to as an "area basic phase distribution Dpa".

In a case where the first area Ar1 corresponds to a G image, the second area Ar2 corresponds to a B image, and the third area Ar3 corresponds to an R image as in the present embodiment, the area basic phase distribution Dpa is obtained for each of the G, B, and R images.

The scaling on the basic phase distribution Dpr is performed as scaling by a magnification "ard/arr", where an area of the entire phase modulatable region is denoted by "arr", and an area of the domain Dm is denoted by "ard".

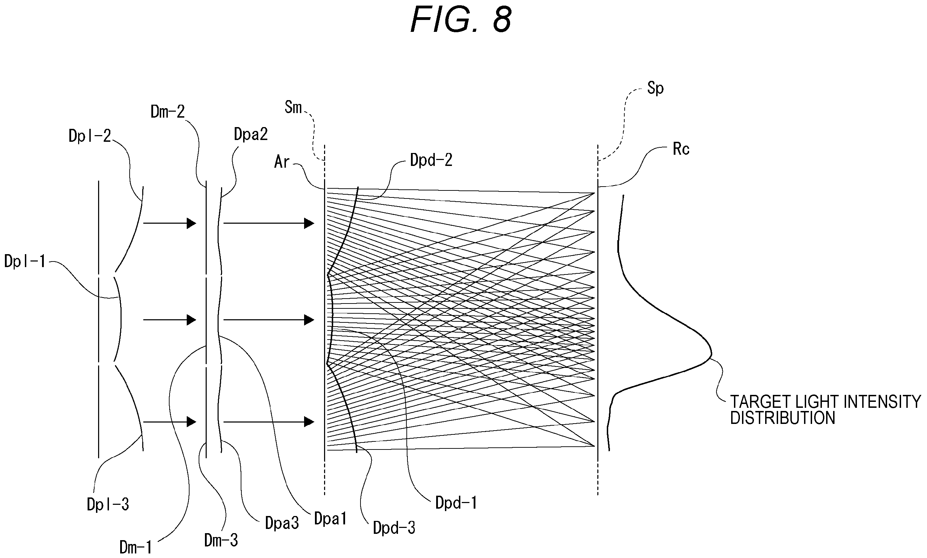

Fig. 8 is an explanatory diagram of addition of lens components.

Here, Fig. 8 shows, as the domain Dm, a domain Dm-1 (corresponding to the second area Ar2) located at the center and a domain Dm-2 (corresponding to the first area Ar1) and a domain Dm-3 (corresponding to the third area Ar3) located on the left and right sides of the domain Dm-1. In the drawing, a phase distribution indicated as a lens component Dpl-1 is a phase distribution serving as a lens component corresponding to a position of the domain Dm-1, and lens components Dpl-2 and Dpl-3 are phase distributions serving as lens components corresponding to positions of the respective domains Dm-2 and Dm-3. Further, area basic phase distributions Dpa1, Dpa2, and Dpa3 mean the area basic phase distributions Dpa obtained corresponding to the domains Dm-1, Dm-2, and Dm-3.

As shown in the drawing, the phase distribution Dpd-1 to be set for the domain Dm-1 is obtained as a phase distribution obtained by adding the lens component Dpl-1 to the area basic phase distribution Dpa1. Similarly, the phase distribution Dpd-2 to be set for the domain Dm-2 is obtained as a phase distribution obtained by adding the lens component Dpl-2 to the area basic phase distribution Dpa2, and the phase distribution Dpd-3 to be set for the domain Dm-3 is obtained as a phase distribution obtained by adding the lens component Dpl-3 to the area basic phase distribution Dpa3.

Thus, the domains Dm, i.e., the domains Dm-1, Dm-2, and Dm-3 can reproduce respective target light intensity distributions in the same region on the reproduction surface Sp.

Hereinafter, a phase distribution obtained by adding the lens component Dpi corresponding to each domain Dm to the area basic phase distribution Dpa as described above will be collectively referred to as an "area phase distribution Dpd".

(1-3. Control Method and Configuration of Control Unit in First Embodiment)

Based on the above description, a control method for image reproduction in a first embodiment and a configuration of the control unit 4 for achieving the control method will be described below.

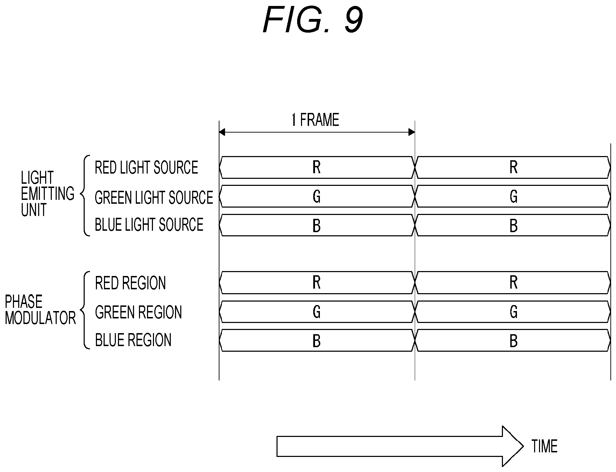

Fig. 9 is an explanatory diagram of a control method for generating a full-color reproduction image in the first embodiment.

In the drawing, a "red light source", a "green light source", and a "blue light source" schematically show light emitting operations of the light emitting elements 2r, 2g, and 2b, respectively. Further, a "red region", a "green region", and a "blue region" in the drawing schematically show execution modes of phase modulation in the third area Ar3, the first area Ar1, and the second area Ar2, respectively, in the phase modulator 3.

In the present embodiment, as shown in Fig. 3 above, light of the corresponding wavelength band is incident on each area Ar of the phase modulator 3, and then each area Ar simultaneously performs spatial light phase modulation on the incident light in each frame period.

For confirmation, the frame period here means a frame period of an image to be reproduced as a reproduction image, that is, a target image in image reproduction. In a case where full-color image reproduction is performed, an R image, a G image, and a B image are input as target images. Each area Ar performs spatial light phase modulation according to the area phase distribution Dpd calculated on the basis of the input image of the corresponding color, and thus images of the respective colors are superimposed on the same region on the reproduction surface Sp. Therefore, a full-color reproduction image can be obtained.

When each area Ar simultaneously performs spatial light phase modulation on the incident light of each color in each frame period as described above, it is unnecessary to cause the light of each color to enter the phase modulator 3 by time division in each frame period. As shown in the drawing, in the present embodiment, the light of each color is simultaneously emitted in each frame period.

Because it is unnecessary to cause the light of each color to enter the phase modulator 3 by time division as described above, it is possible to increase an amount of light emission for each color in each frame period and to improve luminance of a reproduction image.

Further, according to the configuration of the lighting device 1 in Fig. 1, it is unnecessary to provide the phase modulator 3 for each color. This makes it possible to prevent an increase in size and cost of the optical system.

Therefore, according to the present embodiment, it is possible to improve the luminance of the reproduction image while reducing the size and cost of the optical system.

Here, the term "simultaneously" is used in the above description, and the term "simultaneously" here does not only mean that execution periods of spatial light phase modulation in the respective areas Ar (phase modulation areas) completely match with each other, but means that it is only necessary to satisfy at least a condition that there is a period in which the spatial light phase modulation is performed in all the phase modulation areas. That is, if the condition is satisfied, at least one of an execution start timing and execution end timing of the spatial light phase modulation may be different between a certain phase modulation area and another phase modulation area.

Note that the concept of "simultaneously" is similarly applied to emission of light of each wavelength band in the light emitting unit 2.

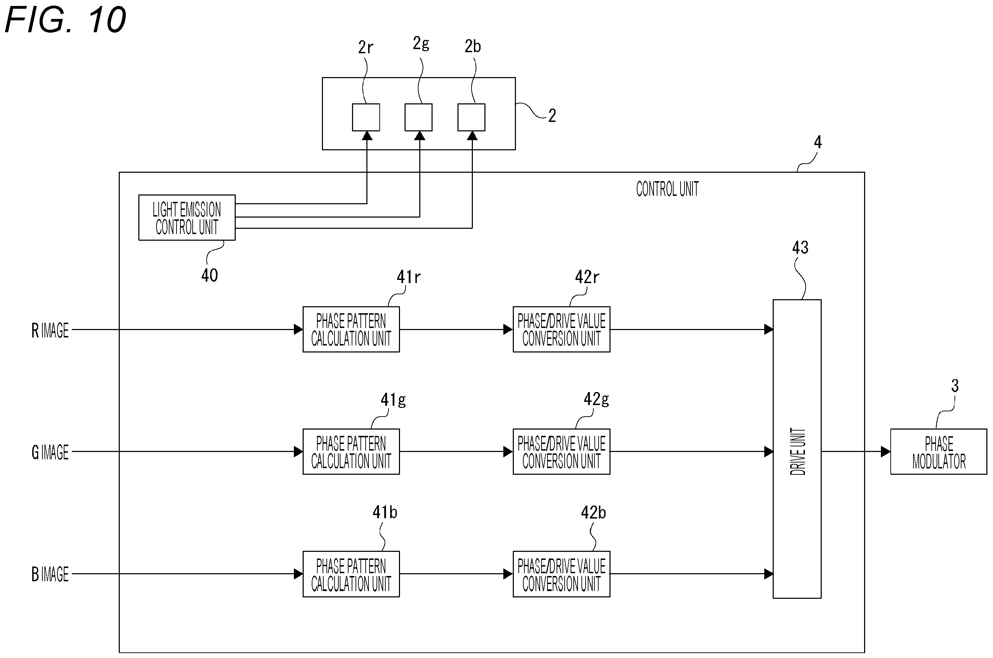

Fig. 10 is an explanatory diagram of a configuration of the control unit 4 in Fig. 1. Note that Fig. 10 shows the light emitting unit 2 and the phase modulator 3 in Fig. 1 together with an internal configuration example of the control unit 4.

As shown in the drawing, the control unit 4 includes a light emission control unit 40, a plurality of phase pattern calculation units 41 as phase pattern calculation units 41r, 41g, and 41b, a plurality of phase/drive value conversion units 42 as phase/drive value conversion units 42r, 42g, and 42b, and a drive unit 43.

The light emission control unit 40 controls light emitting operations of the light emitting elements 2r, 2g, and 2b included in the light emitting unit 2. That is, the light emission control unit performs on/off control (light emission/non-light emission control) for each of the light emitting elements 2r, 2g, and 2b.

Each phase pattern calculation unit 41 calculates the area phase distribution Dpd for the corresponding area Ar on the basis of an input image of the corresponding color.

Here, the phase distribution can be rephrased to indicate a pattern of phase modulation in the phase modulator 3 and thus will also be referred to as a "phase modulation pattern" below.

Specifically, the phase pattern calculation unit 41r calculates the phase modulation pattern as the area phase distribution Dpd for the third area Ar3 on the basis of an input R image. Further, the phase pattern calculation unit 41g calculates the phase modulation pattern as the area phase distribution Dpd for the first area Ar1 on the basis of an input G image, and the phase pattern calculation unit 41b calculates the phase modulation pattern as the area phase distribution Dpd for the second area Ar2 on the basis of an input B image.

Note that the method of calculating the area phase distribution Dpd for each area Ar has already been described with reference to Figs. 5 to 8, and thus redundant description is omitted.

Each phase/drive value conversion unit 42 converts the phase modulation pattern input from the corresponding phase pattern calculation unit 41 into drive signal values of the phase modulator 3. That is, the phase/drive value conversion unit obtains a drive signal value of each pixel of the phase modulator 3 for achieving the phase distribution as the input phase modulation pattern.

Specifically, the phase/drive value conversion unit 42r receives an input of the phase modulation pattern for the third area Ar3 calculated by the phase pattern calculation unit 41r and converts the phase modulation pattern into drive signal values, thereby obtaining the drive signal values of the respective pixels of the third area Ar3. Further, the phase/drive value conversion unit 42g receives an input of the phase modulation pattern for the first area Ar1 calculated by the phase pattern calculation unit 41g and converts the phase modulation pattern into drive signal values, thereby obtaining the drive signal values of the respective pixels of the first area Ar1.

Furthermore, the phase/drive value conversion unit 42b receives an input of the phase modulation pattern for the second area Ar2 calculated by the phase pattern calculation unit 41b and converts the phase modulation pattern into drive signal values, thereby obtaining the drive signal values of the respective pixels of the second area Ar2.

The drive unit 43 includes a drive circuit that can individually drive each pixel of the phase modulator 3 and drives the phase modulator 3 according to the drive signal value of each pixel of each area Ar input from each phase/drive value conversion unit 42.

In order to achieve the control method in the first embodiment described with reference to Fig. 9, the control unit 4 operates as follows.

That is, the light emission control unit 40 causes the light emitting elements 2r, 2g, and 2b to simultaneously emit light in each frame period. Specifically, in the present example, the light emission control unit 40 starts light emission of the light emitting elements 2r, 2g, and 2b at a start timing of each frame period and ends the light emission of the light emitting elements 2r, 2g, and 2b at an end timing of each frame period.

Further, each phase pattern calculation unit 41 sequentially calculates a phase modulation pattern of the corresponding area for a frame image of the corresponding color sequentially input in a time direction, and each phase/drive value conversion unit 42 sequentially converts the phase modulation pattern sequentially output from the corresponding phase pattern calculation unit 41 into drive signal values.

Then, the drive unit 43 simultaneously drives the areas Ar in each frame period on the basis of the drive signal values of each area Ar output from each phase/drive value conversion unit 42 for each frame period. Specifically, in the present example, the drive unit 43 drives the phase modulator 3 such that, in each frame period, a state in which each area Ar is driven on the basis of the drive signal values from each phase/drive value conversion unit 42 continues from the start timing to the end timing of the frame period.

By the above operation of the control unit 4, the control method in the first embodiment described above with reference to Fig. 9 is achieved.

(1-4. Color Balance Adjustment)

Here, color balance adjustment such as white balance adjustment on a reproduction image will be described.

If formation of a reproduction image, in other words, formation of a light intensity distribution pattern on the reproduction surface Sp is performed by the intensity modulator that performs spatial light intensity modulation, color balance adjustment can be achieved by controlling an amount of light of a target color by using light attenuation and light shielding functions of the intensity modulator.

However, in a case where a reproduction image is formed by spatial light phase modulation as in the lighting device 1, the phase modulator 3 cannot attenuate or shield light unlike the intensity modulator, and thus the color balance adjustment by control of the spatial light modulator cannot be achieved.

Therefore, it is conceivable to perform color balance adjustment of a reproduction image in the lighting device 1 by adjusting the amount of light emission of the light emitting unit 2.

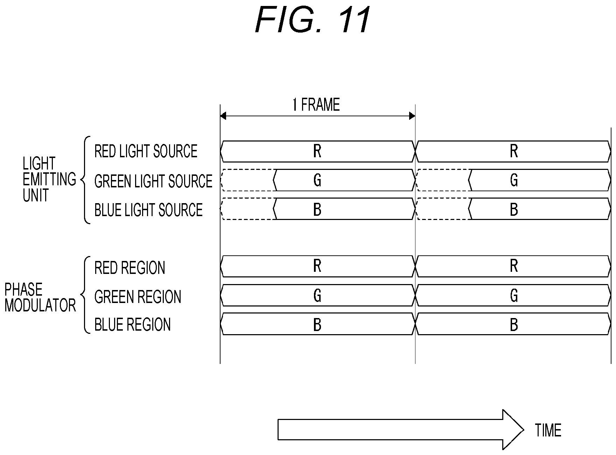

For example, as shown in Fig. 11, the color balance adjustment can be achieved by adjusting a light emission time of light of a target color per unit time (in the drawing, the light emission time for each frame period).

For example, in a case where redness tends to be weak in color reproduction of the reproduction image, light emission times of G light and B light per unit time are reduced as compared with that of R light as shown in the drawing, and the redness in the reproduction image is adjusted to be relatively strong.

Such color balance adjustment can be achieved by light emission control of the light emitting elements 2r, 2g, and 2b by the light emission control unit 40 provided in the control unit 4. For example, indicated values of a balance among amounts of emission of R light, G light, and B light are input to the light emission control unit 40, and the light emission control unit 40 controls the light emission times of the light emitting elements 2r, 2g, and 2b per unit time on the basis of the indicated values.

Note that, in the above description, the example where the amount of light emission for each color is adjusted by controlling the light emission time per unit time has been described. However, the amount of light emission for each color can also be adjusted by controlling drive current values of the light emitting elements included in the light emitting unit 2.

Alternatively, in a case where a plurality of light emitting elements is provided for each color, the amount of light emission for each color may be adjusted by adjusting the number of light emitting elements in a light emitting state.

<2. Second Embodiment>

Next, a second embodiment will be described. In the second embodiment, the lighting device described in the first embodiment is applied to a projector device.

Note that, in the following description, the same reference signs are given to portions similar to those already described, and description thereof is omitted.

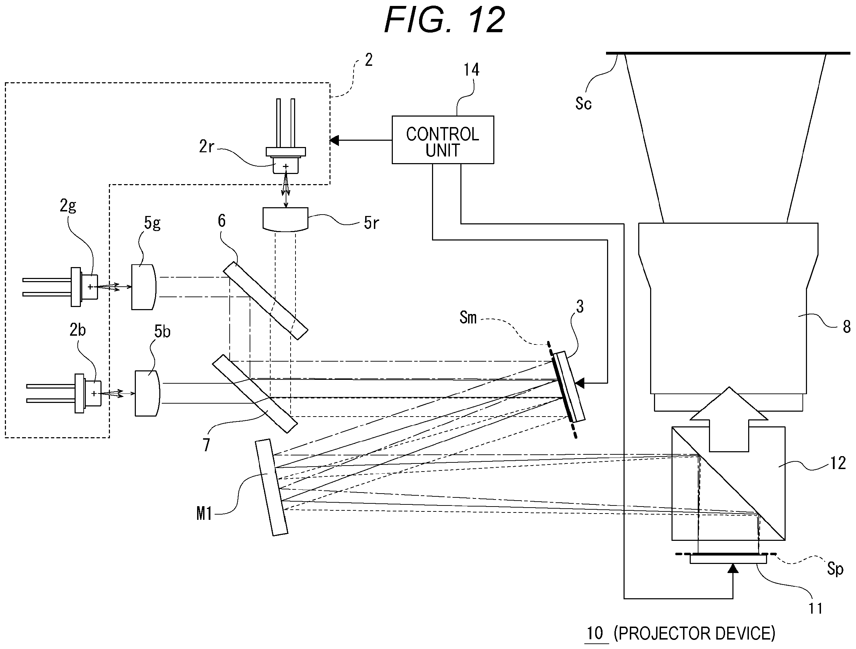

Fig. 12 shows a configuration example of a projector device 10 in the second embodiment.

Differences from the lighting device 1 of Fig. 1 are that an intensity modulator 11 is added, that a polarization beam splitter 12 is provided instead of the second mirror M2, and that a control unit 14 is provided instead of the control unit 4.

In the projector device 10, R light, G light, and B light emitted from the phase modulator 3 and reflected by the first mirror M1 are reflected by a reflection surface of the polarization beam splitter 12 and are incident on the intensity modulator 11 configured as a reflective spatial light intensity modulator. The intensity modulator 11 includes, for example, a DMD or a reflective liquid crystal panel.

In the projector device 10, an intensity modulation surface of the intensity modulator 11, which is a surface on which spatial light intensity modulation is performed, is defined as the reproduction surface Sp. That is, in the projector device 10, a full-color reproduction image is formed by the phase modulator 3 on the intensity modulation surface.

In the intensity modulator 11, the reproduction image by the phase modulator 3 is subjected to spatial light intensity modulation for correcting a resolution of the reproduction image, specifically, spatial light intensity modulation for enhancing the resolution.

The reproduction image subjected to the spatial light intensity modulation by the intensity modulator 11 is transmitted through the reflection surface of the polarization beam splitter 12 and is incident on the projection lens 8. Therefore, an enlarged image of the reproduction image subjected to the spatial light intensity modulation by the intensity modulator 11 is projected on a predetermined projection surface such as the front surface of the screen Sc.

In such a projector device 10, the reproduction image by the phase modulator 3 functions as projector illumination light that reproduces a luminance distribution of an image to be displayed. Therefore, the dynamic range of the projection image can be expanded as compared with a case where the projection image is generated only by the spatial light intensity modulation by the intensity modulator 11. This is an idea similar to, for example, performing area division driving of a backlight according to an input image in a liquid crystal television (television receiver).

Here, a reproduction image obtained by performing spatial light phase modulation based on the freeform method or the like generally tends to have a low spatial resolution. In particular, in the present embodiment, the phase modulator 3 is divided into areas, and light beams are subjected to phase modulation for each area Ar. This is disadvantageous in terms of resolution.

Therefore, the intensity modulator 11 performs spatial light intensity modulation on the reproduction image so as to compensate for a high-frequency component of an input image, thereby reproducing a high-resolution image as a projection image.

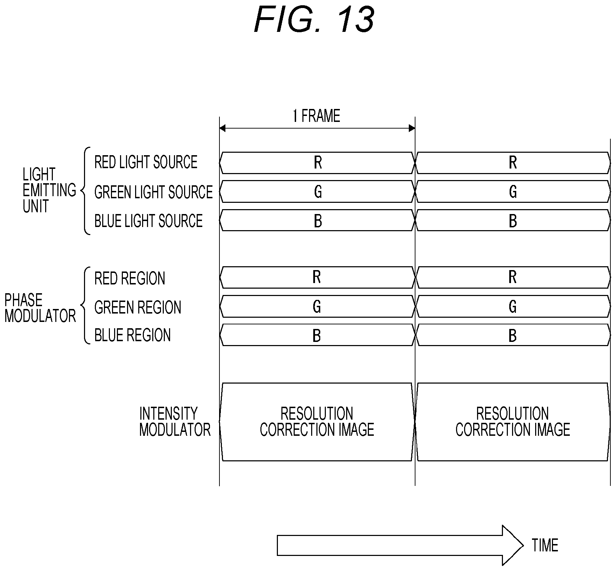

Fig. 13 is an explanatory diagram of a control method for image reproduction in the second embodiment.

As can be seen by comparing Fig. 13 with Fig. 9 above, also in this case, control of the light emitting unit 2 and drive control of the phase modulator 3 are similar to those in the first embodiment.

In the second embodiment, in the intensity modulator 11, spatial light intensity modulation based on a resolution correction image that is an image for correcting the resolution of the reproduction image is performed in each frame period. Specifically, a resolution correction image based on a frame image is generated for each frame of an input image, and spatial light intensity modulation based on the resolution correction image of the corresponding frame is performed in each frame period.

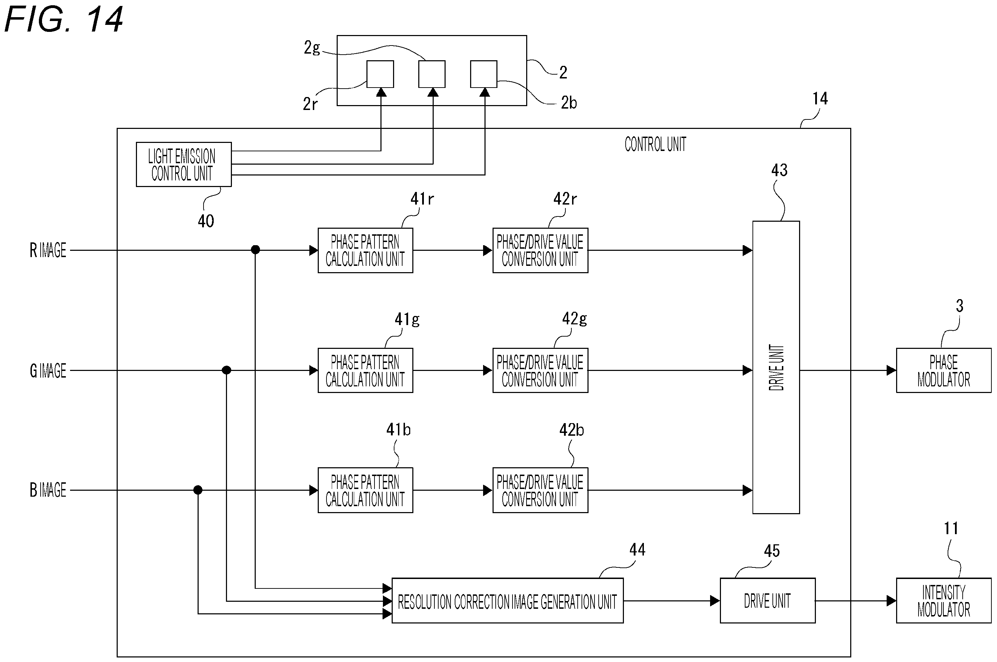

Fig. 14 is an explanatory diagram of a configuration example of the control unit 14 for achieving the control method in the above second embodiment. Note that Fig. 14 shows the light emitting unit 2, the phase modulator 3, and the intensity modulator 11 in Fig. 12 together with an internal configuration example of the control unit 14.

A difference from the control unit 4 of Fig. 10 is that a resolution correction image generation unit 44 and a drive unit 45 are added.

The resolution correction image generation unit 44 generates a resolution correction image on the basis of an input R image, G image, and B image. The resolution correction image can be, for example, an image in which maximum values of R, G, and B are allocated to each pixel.

Note that there are various methods of generating a resolution correction image, and the present invention is not limited to a specific method.

For example, the present invention is not limited to a simple method of allocating the maximum values of R, G, and B as described above, and it is also conceivable to generate a resolution correction image on the basis of a comparison result between an expected image of the reproduction image by the phase modulator 3 (an image of the reproduction image expected from phase modulation patterns calculated by the respective phase pattern calculation units 41r, 41g, and 41b) and the input image (a full-color image achieved by the R image, the G image, and the B image). For example, there is a method of dividing a luminance value of the input image by a luminance value of the expected image of the reproduction image. Alternatively, for example, a difference image between the input image and the expected image of the reproduction image may be used as the resolution correction image.

The drive unit 45 drives each pixel of the intensity modulator 11 according to the resolution correction image input from the resolution correction image generation unit 44.

As understood from the above description, the intensity modulator 11 is driven to perform, in each frame period, the spatial light intensity modulation according to the resolution correction image generated from the corresponding frame image.

The spatial light intensity modulation in the intensity modulator 11 may be performed at least "simultaneously" with the spatial light phase modulation of each area Ar in the phase modulator 3. Specifically, in the present example, the drive unit 45 drives the intensity modulator 11 such that, in each frame period, a state in which the spatial light intensity modulation according to the resolution correction image of the corresponding frame is performed continues from the start timing to the end timing of the frame period.

The projector device 10 described above can obtain an image having a high dynamic range and high resolution as a projection image.

<3. Third Embodiment>

In a third embodiment, compression processing is performed on a drive signal value of the phase modulator 3.

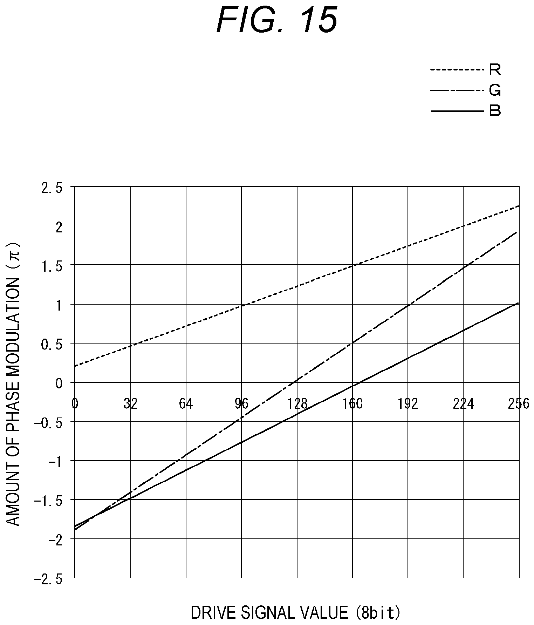

Fig. 15 shows a relationship between a drive signal value of the phase modulator 3 and an amount of phase modulation for each of R, G, and B colors.

In the phase modulator 3, characteristics of liquid crystal molecules are basically the same for each pixel, and thus the amount of phase modulation is different depending on a wavelength of incident light. Specifically, the amount of phase modulation with respect to the same drive signal value range increases as the wavelength is shorter.

In the present example, a maximum value of a phase difference in a phase modulation pattern is set to, for example, $2\pi$. In order to secure a maximum phase difference of $2\pi$ for any of R, G, and B light beams, gamma setting of the phase modulator 3 is performed in accordance with R light of the longest wavelength. For example, in a case where the drive signal value of the phase modulator 3 has 256 gradations from 0 to 255, the gamma setting of the phase modulator 3 is performed such that a phase difference between the drive signal value = 0 and the drive signal value = 255 is $2\pi$ in R light.

However, in such a setting, the phase difference with respect to the drive signal value range from 0 to 255 is larger than $2\pi$ in G light and B light as shown in the drawing. Specifically, in the shown example, the phase difference of G light is 2.8 $\pi$, and the phase difference of B light is 3.8 $\pi$.

As described above, when the phase difference with respect to a range from a minimum value to the maximum value of the drive signal values is larger than a specified phase difference ($2\pi$ in this case), appropriate spatial light phase modulation according to the calculated phase modulation pattern cannot be performed in the second area Ar2 on which G light is incident and the first area Ar1 on which B light is incident, and thus a full-color image may not be appropriately reproduced.

Therefore, the drive signal value compression processing is performed for at least the area Ar on which light of the shortest wavelength band is incident. Specifically, in the present example, three light beams of R light, G light, and B light are used, and the gamma setting of the phase modulator 3 is performed such that the maximum phase difference for R light is $2\pi$, and thus the drive signal value compression processing is performed such that the maximum phase difference is $2\pi$ for the areas Ar of G light and B light that are light beams of wavelength bands other than R light, that is, for the second area Ar2 and the first area Ar1.

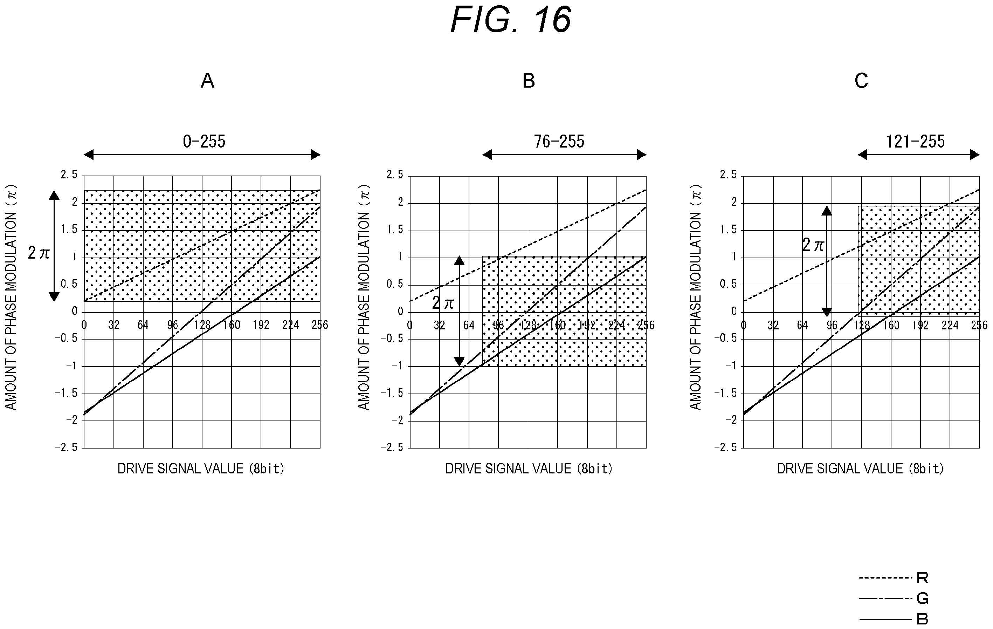

Fig. 16 is an explanatory diagram of the drive signal value compression processing.

Fig. 16A shows, as a comparison, a relationship between the drive signal value and the amount of phase modulation for R light in a case where the gamma setting is performed in accordance with R light. As shown in the drawing, for R light in this case, the amount of phase modulation is $2\pi$ with respect to the drive signal value range from 0 to 255.

Fig. 16B shows an example of the compression processing for G light, and Fig. 16C shows an example of the compression processing for B light.

Here, as an example of the compression processing, compression processing of bringing the range closer to the maximum value of the drive signal value is shown. That is, the drive signal value is compressed within a range from 255, which is the maximum value of the drive signal value, to a drive signal value obtained when the phase difference from the amount of phase modulation at the time of the drive signal value = 255 is $2\pi$. Specifically, in the shown example, the drive signal value obtained when the phase difference from the amount of phase modulation at the time of the drive signal value = 255 is $2\pi$ is 76 for G light, and thus the drive signal value is compressed within the range from 76 to 255 for G light (second area Ar2). Further, for B light, the drive signal value obtained when the phase difference from the amount of phase modulation at the time of the drive signal value = 255 is $2\pi$ is 121, and thus the drive signal value is compressed within the range of 121 to 255 for B light (first area Ar1).

Here, "compression" of the drive signal value means that conversion is performed such that a target drive signal value falls within a range narrower than the range from the minimum value to the maximum value of the drive signal values (hereinafter, referred to as "compression range").

Therefore, in the above description, the example where the compression range is brought close to the maximum value for light of a target wavelength band has been described. However, conversely, the compression range can also be brought close to the minimum value, for example, and the compression range is arbitrarily set to any range from the minimum value to the maximum value of the drive signal values.

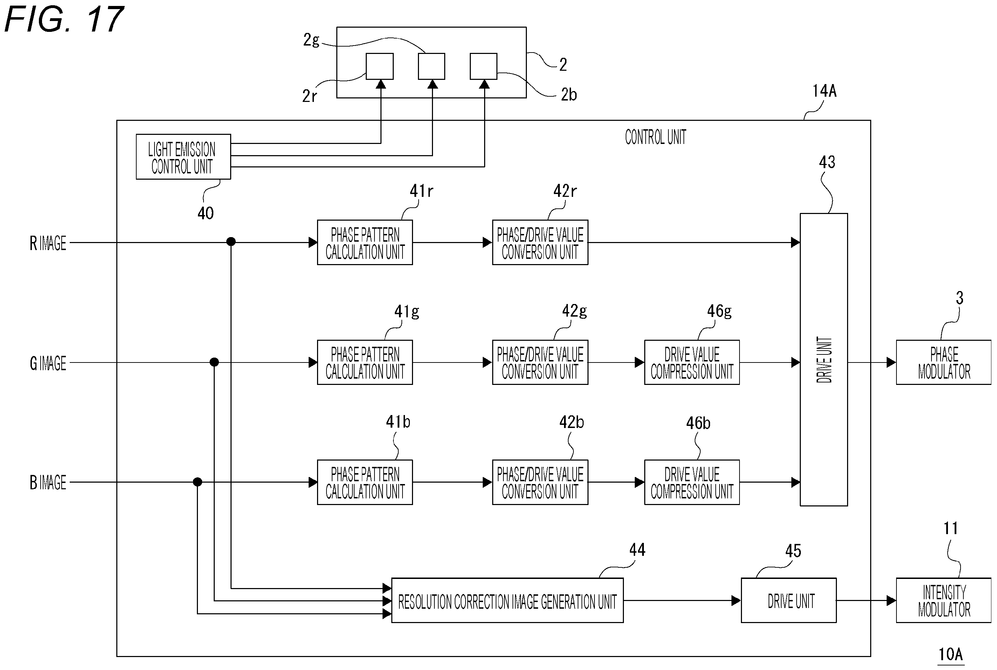

Fig. 17 shows a configuration example of a control unit 14A included in a projector device 10A that performs the above drive signal value compression processing and also shows the light emitting unit 2, the phase modulator 3, and the intensity modulator 11 as in Fig. 14.

Note that the configuration of the projector device 10A is similar to that of Fig. 12 except that the control unit 14A is provided instead of the control unit 14, and thus redundant description is omitted.

The control unit 14A is different from the control unit 14 in that drive value compression units 46 (drive value compression units 46g and 46b) are added to respective signal processing systems for a G image and a B image.

As shown in the drawing, the drive value compression unit 46g is provided between the phase/drive value conversion unit 42g and the drive unit 43, and the drive value compression unit 46b is provided between the phase/drive value conversion unit 42b and the drive unit 43.

The drive value compression unit 46g performs the compression processing on drive signal values of the second area Ar2 input from the phase/drive value conversion unit 42g such that a phase difference with respect to a range from the minimum value to the maximum value of the drive signal values subjected to the compression processing is $2\pi$ and outputs the drive signal values to the drive unit 43.

The drive value compression unit 46b performs compression processing on drive signal values of the first area Ar1 input from the phase/drive value conversion unit 42b such that a phase difference with respect to a range from the minimum value to the maximum value of the drive signal values subjected to the compression processing is $2\pi$ and outputs the drive signal values to the drive unit 43.

Here, in a case where the compression range is brought close to the maximum value as shown in Figs. 16B and 16C, conversion equations of the drive signal values are shown below.

Converted drive signal value of G light = 76 + unconverted drive signal value $\times$ (255 - 76)/255

Converted drive signal value of B light = 121 + unconverted drive signal value $\times$ (255 - 121)/255

Note that, also in a case where the compression range is set to another range such as a range close to the minimum value, converted drive signal values can be obtained in a similar manner to the above equations.

Note that, in the above description, the example where the compression processing is performed on drive signal values converted from a phase modulation pattern has been described. However, a similar result can be obtained by performing the compression processing on the phase modulation pattern. That is, the compression processing is performed on the phase modulation pattern calculated by each phase pattern calculation unit 41g or 41b, that is, on a value indicating the amount of phase modulation for each pixel such that a phase difference with respect to a range from the minimum value to the maximum value of the drive signal values converted by the phase/drive value conversion unit 42g or 42b is $2\pi$. Even in a case where the compression processing is performed on the phase modulation pattern in this manner, the drive signal values are compressed as a result. In this sense, in the present technology, performing the compression processing on the phase modulation pattern in this manner is synonymous with performing the "drive signal value compression processing".

<4. Fourth Embodiment>

In a fourth embodiment, drive mode switching regarding image reproduction is performed.

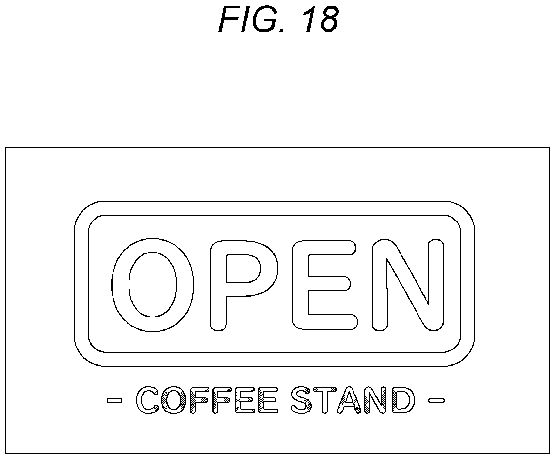

The lighting device 1 and the projector devices 10 and 10A described hereinabove can improve the luminance of a reproduction image by simultaneously performing spatial light phase modulation on each light beam for each area Ar of the phase modulator 3. Meanwhile, due to a low resolution of an image obtained by the spatial light phase modulation for each area Ar, color mixing tends to occur in a region where a color steeply changes in a reproduction image as shown in Fig. 18. Specifically, the example of Fig. 18 shows a reproduction image including letters "OPEN", "COFFEE", and "STAND", and spaces between the letters are wide for the letters "OPEN", and spaces between the letters are narrow for "COFFEE" and "STAND". Further, in those terms "COFFEE" and "STAND", adjacent letters have different colors, but, because the spaces between the letters are narrow, color mixing tends to occur between those letters (see satin portions in the drawing).

Therefore, in the fourth embodiment, in a case where color mixing tends to occur in the reproduction image, a mode in which light of each color are caused to enter the phase modulator 3 by time division such that spatial light phase modulation for each color is performed in the phase modulator 3 by time division (hereinafter, referred to as "color mixing suppression mode") is selected instead of a mode in which spatial light phase modulation is simultaneously performed in the area Ar of each color as described in the above embodiments, in other words, a mode in which light of the corresponding color is caused to simultaneously enter each area Ar.

Meanwhile, in a case where color mixing hardly occurs in the reproduction image, a mode in which light of the corresponding color is simultaneously incident on each area Ar and is simultaneously subjected to spatial light phase modulation for each area Ar (hereinafter, referred to as a "luminance-prioritized mode") is selected as in the former case in order to emphasize the luminance of the reproduction image.

Here, the above luminance-prioritized mode is an example of a simultaneous driving mode in the present technology, that is, a mode in which spatial light phase modulation is simultaneously executed in the phase modulation areas in a state in which light of the corresponding wavelength band is caused to enter each phase modulation area. Further, the above color mixing suppression mode is an example of a time-division driving mode in the present technology, that is, a mode in which spatial light phase modulation is performed on light beams of different wavelength bands by time division in the phase modulator by causing the light beams of the different wavelength bands to enter the phase modulator by time division.

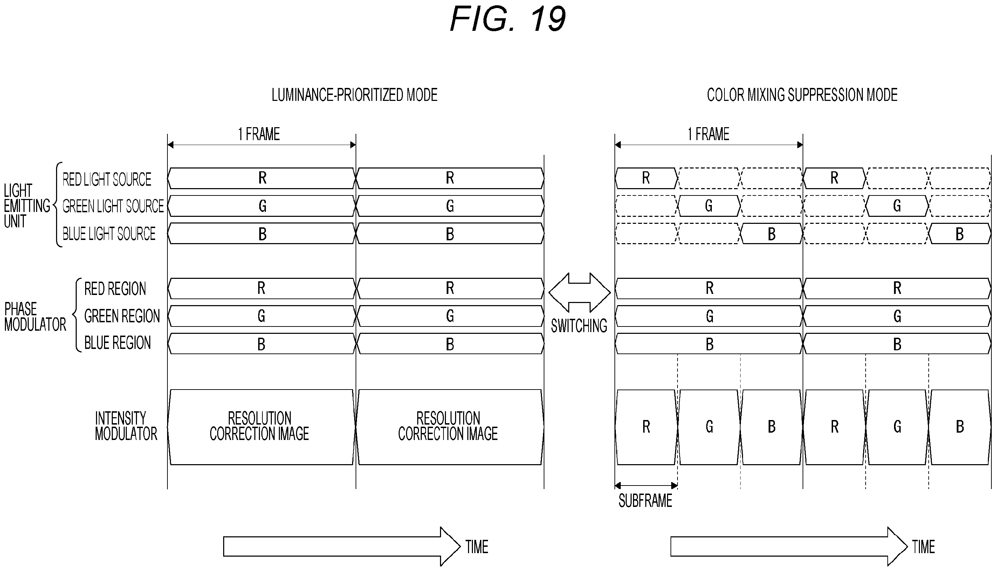

Fig. 19 is an explanatory diagram of the luminance-prioritized mode and the color mixing suppression mode, and specifically, schematically shows a method of driving the light emitting unit 2, the phase modulator 3, and the intensity modulator 11 in the luminance-oriented mode and the color mixing suppression mode.

The method of driving the light emitting unit 2, the phase modulator 3, and the intensity modulator 11 in the luminance-prioritized mode are similar to the method described with reference to Fig. 13, and thus redundant description is omitted.

In the color mixing suppression mode, the time-division driving is performed for each color, and thus one frame is divided into subframes of each color. Specifically, one frame is divided into a subframe of R light, a subframe of G light, and a subframe of B light.

As shown in the drawing, in the color mixing suppression mode, the light emitting unit 2 is caused to emit R light, G light, and B light by time division in each frame period. Specifically, in the present example, R light, G light, and B light are emitted in this order by time division.

Further, in the color mixing suppression mode, the phase modulator 3 is only required to perform spatial light phase modulation for the corresponding color in a subframe period in which the corresponding light is incident in the third area Ar3 (red region), the second area Ar2 (green region), or the first area Ar1 (blue region). Here, an example where each area Ar is maintained in a driving state for one frame period is shown. However, each area Ar is only required to be driven only in at least a subframe period in which light of the corresponding color is incident.

Further, in the color mixing suppression mode, as shown in the drawing, the intensity modulator 11 is driven on the basis of a resolution correction image by using a subframe image of R as the resolution correction image in the subframe period of R (light emission period of R light), is driven on the basis of a resolution correction image by using a subframe image of G as the resolution correction image in the subframe period of G (light emission period of G light), and is driven on the basis of a resolution correction image by using a subframe image of B as the resolution correction image in the subframe period of B (light emission period of B light).

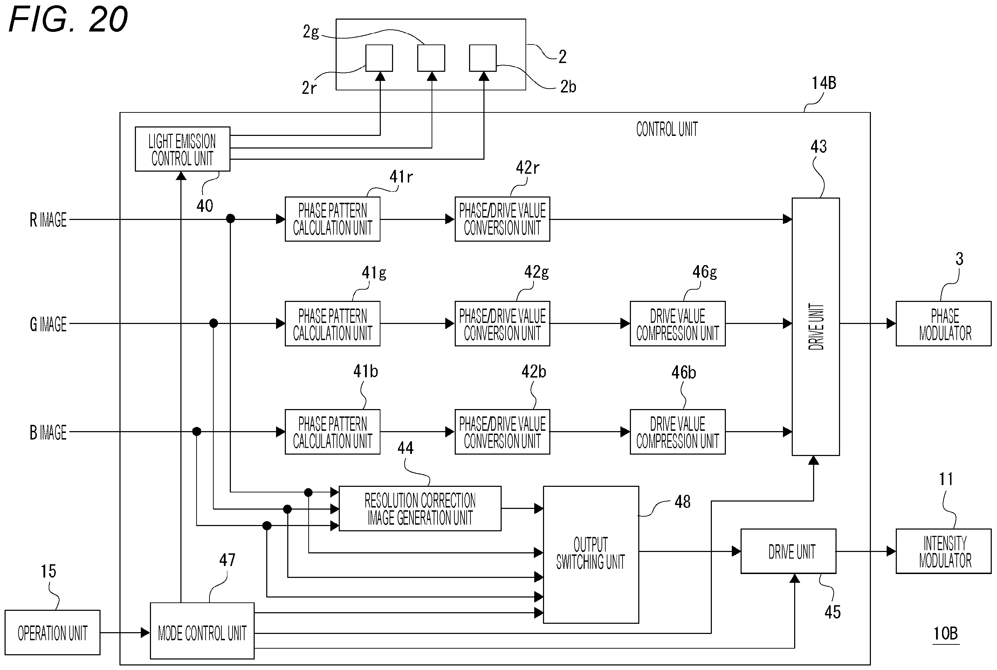

Fig. 20 shows a configuration example of a control unit 14B included in a projector device 10B in the fourth embodiment which can switch between the luminance-prioritized mode and the color mixing suppression mode described above.

Note that the projector device 10B is mainly different from the projector device 10A in that the control unit 14B is provided instead of the control unit 14A, and configurations other than the control unit 14B, such as the optical system, are similar to those described with reference to Fig. 12, and thus redundant description is omitted.

The control unit 14B is different from the control unit 14A in that a mode control unit 47 and an output switching unit 48 are added. Further, an operation unit 15 is provided in the projector device 10B as shown in the drawing. The operation unit 15 comprehensively indicates various operation elements formed in the projector device 10B for a user to perform an operation input.

In the present example, an example where the luminance-prioritized mode and the color mixing suppression mode are switched on the basis of an operation input from the user via the operation unit 15 will be described.

The mode control unit 47 includes, for example, a microcomputer including a central processing unit (CPU), a read only memory (ROM), and a random access memory (RAM) and controls operation of the light emission control unit 40, the drive unit 43, the output switching unit 48, and the drive unit 45, thereby switching between the luminance-prioritized mode and the color mixing suppression mode. The mode control unit 47 performs control for switching between the luminance-prioritized mode and the color mixing suppression mode on the basis of operation input information from the operation unit 15.

A resolution correction image generated by the resolution correction image generation unit 44, an R image, a G image, and a B image are input to the output switching unit 48. The output switching unit 48 outputs an image indicated by the mode control unit 47 among those input images to the drive unit 45.

In the control unit 14B having the above configuration, in a case where the luminance-prioritized mode is indicated by an operation input from the user, regarding the light emitting operation of the light emitting unit 2, the mode control unit 47 instructs the light emission control unit 40 to cause the light emitting elements 2r, 2g, and 2b to simultaneously emit light in each frame period. Further, in the luminance-prioritized mode, regarding the driving of the phase modulator 3, the mode control unit 47 controls the drive unit 43 such that spatial light phase modulation for each color in each area Ar is simultaneously performed in each frame period. Furthermore, in the luminance-prioritized mode, regarding the driving of the intensity modulator 11, the mode control unit 47 instructs the output switching unit 48 to input a resolution correction image by the resolution correction image generation unit 44 to the drive unit 45 in each frame period and controls the drive unit 45 such that spatial light intensity modulation based on the resolution correction image is performed in each frame period.

Meanwhile, in a case where the color mixing suppression mode is indicated, regarding the light emitting operation of the light emitting unit 2, the mode control unit 47 instructs the light emission control unit 40 to cause the light emitting elements 2r, 2g, and 2b to emit light by time division in each frame period. That is, the light emitting element 2r is caused to emit light in the subframe period of R, the light emitting element 2g is caused to emit light in the subframe period of G, and the light emitting element 2b is caused to emit light in the subframe period of B.

Further, in the color mixing suppression mode, regarding the driving of the intensity modulator 11, the mode control unit 47 instructs the output switching unit 48 to input the R image, the G image, and the B image to the drive unit 45 by time division in each frame period and controls the drive unit 45 such that spatial light intensity modulation based on the R image, the G image, and the B image is performed by time division in each frame period. That is, the drive unit 45 is controlled such that the spatial light intensity modulation based on the R image is performed in the subframe period of R, the spatial light intensity modulation based on the G image is performed in the subframe period of G, and the spatial light intensity modulation based on the B image is performed in the subframe period of B.

Note that, in the present example, the driving of the phase modulator 3 in the color mixing suppression mode may be the same as that in the luminance-prioritized mode (see Fig. 19).

Note that, in the above description, the example where the luminance-prioritized mode and the color mixing suppression mode are switched on the basis of an operation input from the user has been described. However, the switching can be performed on the basis of an image analysis result of an input image. In that case, for example, the mode control unit 47 may analyze whether or not a region where a color steeply changes exists as image analysis of the input image, select the color mixing suppression mode if the region exists, and select the luminance-prioritized mode if the region does not exist.

Alternatively, the switching between the luminance-prioritized mode and the color mixing suppression mode may be performed on the basis of information regarding the content type of the input image. For example, there are a case where a region where a color steeply changes tends to exist and a case where such a region hardly exists depending on the content type of the input image. For example, in animation content, the region where a color steeply changes tends to exist, and, in landscape image content, the region where a color steeply changes hardly exists. Therefore, for example, metadata or the like indicating the content type is attached to the input image, and the luminance-prioritized mode and the color mixing suppression mode are switched on the basis of the information regarding the content type of the input image specified from the metadata or the like.

Further, in the above description, there has been described the example where a period of the spatial light intensity modulation in the intensity modulator 11 is switched between a period of each frame and a period of each subframe in accordance with switching between the luminance-prioritized mode and the color mixing suppression mode. However, the period of the spatial light intensity modulation can be set to the period of each subframe also in the luminance-prioritized mode. That is, in the luminance-prioritized mode in this case, spatial light intensity modulation based on the same resolution correction image is performed for each subframe period in each frame period.

Further, in the above description, the driving of the phase modulator 3 is the same in the luminance-prioritized mode and the color mixing suppression mode, but, in the color mixing suppression mode, the spatial light phase modulation for each color in each area Ar may be performed by time division in each frame period. That is, the drive unit 43 is controlled such that the spatial light phase modulation for R light is performed in the third area Ar3 in the subframe period of R, the spatial light phase modulation for G light is performed in the second area Ar2 in the subframe period of G, and the spatial light phase modulation for B light is performed in the first area Ar1 in the subframe period of B.

<5. Fifth Embodiment>

In a fifth embodiment, countermeasures to noise caused by 0th order light of the phase modulator 3 are taken.

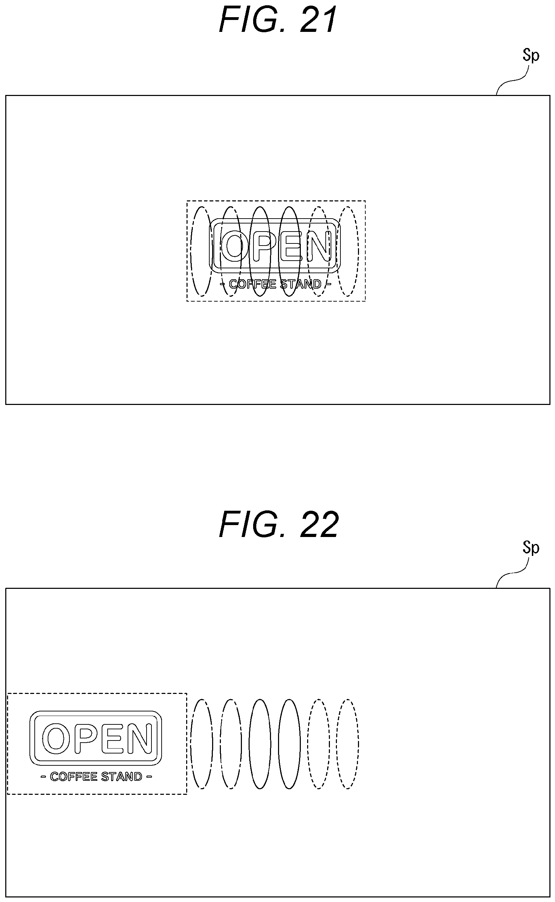

Fig. 21 schematically shows a relationship between 0th order light of the phase modulator 3 and a reproduction image in a case where an image of each wavelength band is superimposed on the same region around an optical axis on the reproduction surface Sp. In the drawing, luminous fluxes indicated by dotted lines represent luminous fluxes of 0th order light for R light of the phase modulator 3, luminous fluxes indicated by alternate long and short dash lines represent luminous fluxes of 0th order light for G light of the phase modulator 3, and luminous fluxes indicated by solid lines represent luminous fluxes of 0th order light for B light of the phase modulator 3. Note that, as in Fig. 3 above, two light emitting elements 2r, 2g, and 2b are provided here, and two luminous fluxes of the corresponding color are caused to enter each area Ar of the phase modulator 3.

The 0th order light here is generated due to reflected light from an inter-pixel separation unit in the phase modulator 3, partial orientation disturbance of liquid crystals, or the like.

Further, in Fig. 21, an image including letters of "OPEN" and "COFFEE STAND" is shown as the reproduction image.

As shown in the drawing, in a case where images of the respective colors are superimposed on the same region around the optical axis on the reproduction surface Sp, components of the 0th order light of the respective colors of the phase modulator 3 are superimposed on the reproduction image as noise. This leads to deterioration in image quality of the reproduction image.

Therefore, in the fifth embodiment, as shown in Fig. 22, for example, the spatial light phase modulation for each area Ar in the phase modulator 3 is performed such that the reproduction image by each area Ar is emitted to a region outside an irradiation region of the 0th order light of the phase modulator 3 on the reproduction surface Sp.

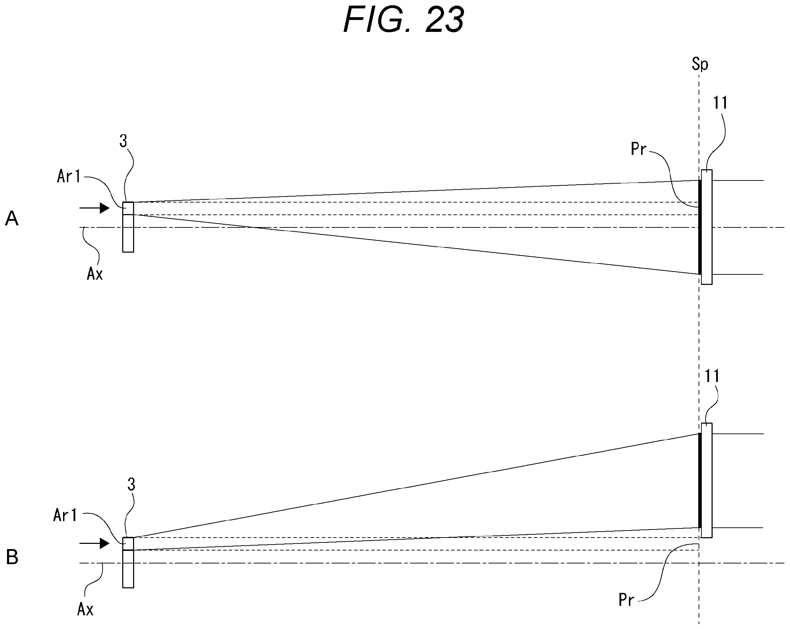

Fig. 23 is an explanatory diagram of spatial light phase modulation for offsetting the irradiation region of the reproduction image as described above. Here, only a relationship between the 0th order light and the reproduction image for the first area Ar1 is representatively shown.

Fig. 23A shows, as a comparison, a relationship between a luminous flux of the reproduction image (in the drawing, a luminous flux indicated by solid lines) from the first area Ar1 and a luminous flux of the 0th order light (G light) (in the drawing, a luminous flux indicated by dotted lines) in a case where the reproduction image is emitted to a region around an optical axis Ax of the optical system on the reproduction surface Sp. In the drawing, a region indicated by "Pr" on the reproduction surface Sp indicates an irradiation region of the 0th order light of G light from the first area Ar1. Hereinafter, the region Pr serving as the irradiation region of the 0th order light will be referred to as the "irradiation region Pr".

In this case, as shown in the drawing, the intensity modulator 11 is arranged such that the center thereof matches with the optical axis Ax.

Meanwhile, in the fifth embodiment, as shown in Fig. 23B, spatial light phase modulation in the first area Ar1 is performed such that the reproduction image is emitted to a region outside the irradiation region Pr of the 0th order light on the reproduction surface Sp.

Although not shown, the spatial light phase modulation is similarly performed for the second area Ar2 and the third area Ar3 such that the reproduction image is emitted to the region outside the irradiation region Pr. Note that, for confirmation, also in this case, the condition that reproduction images of the respective colors are superimposed on the same region on the reproduction surface Sp is satisfied.

In this case, the intensity modulator 11 is arranged at a position where the spatial light intensity modulation can be performed on the reproduction image emitted to the region outside the irradiation region Pr as described above. That is, the intensity modulator is not arranged at a position where the center thereof matches with the optical axis Ax.

Here, in order to shift the reproduction image to the region outside the irradiation region Pr for each area Ar as described above, the lens component described above is only required to be adjusted in the spatial light phase modulation.

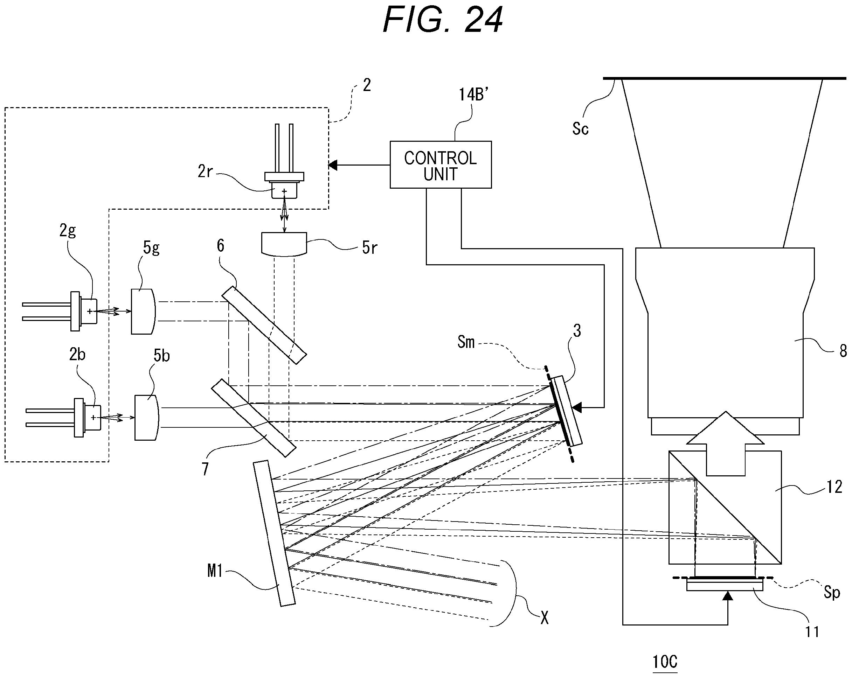

Fig. 24 shows a configuration example of a projector device 10C in the fifth embodiment.

A difference from the projector device 10B described in the fourth embodiment is that a control unit 14B' is provided instead of the control unit 14B.

Although not shown, in the control unit 14B', the phase pattern calculation units 41r, 41g, and 41b each calculate a phase modulation pattern for superimposing and emitting reproduction images of R light, G light, and B light on the same region outside the irradiation region Pr. This point is different from the control unit 14B.

Further, in the projector device 10C, the intensity modulator 11 is not arranged at a position where the center thereof matches with the optical axis Ax, but is arranged at a position where the spatial light intensity modulation can be performed on the reproduction image emitted to the region outside the irradiation region Pr on the reproduction surface Sp.

The optical system in this case is configured such that luminous fluxes of reproduction images of the respective colors from the phase modulator 3 are reflected by the first mirror M1, then are reflected by the reflection surface of the polarization beam splitter 12, and are guided to the intensity modulator 11, whereas the 0th order light of the phase modulator 3 is reflected by the first mirror M1 in a direction different from that of the luminous fluxes of the reproduction images of the respective colors and is not guided to the polarization beam splitter 12 as indicated by "X" in the drawing.

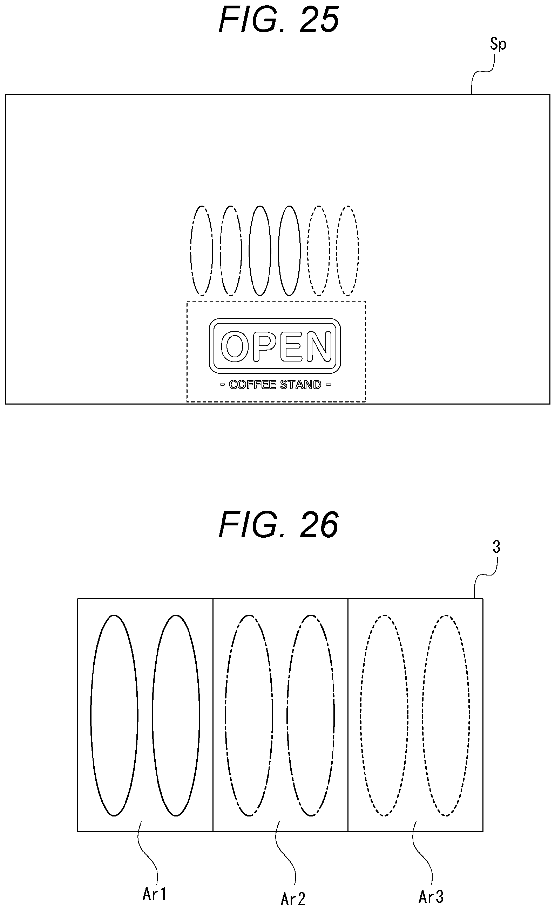

Note that, in the above description, the example where the reproduction image is shifted in a lateral direction with respect to the irradiation region Pr (see Fig. 22) has been described. However, as shown in Fig. 25, the reproduction image can be shifted in a vertical direction with respect to the irradiation region Pr, and a shift direction of the reproduction image is arbitrary.

Here, in a case where the reproduction image is shifted as described above, it is necessary to consider that an amount of bending of light caused by the spatial light phase modulation is different depending on a wavelength of incident light. Specifically, in the spatial light phase modulation, the amount of bending of light tends to decrease as the wavelength of the incident light decreases.

Therefore, in particular, in a case where it is desired to increase the shift amount of the reproduction image, it is necessary to consider which wavelength band of light is caused to enter which area Ar of the phase modulator 3. For example, in a case where it is assumed that the reproduction image is shifted to a left side of the irradiation region Pr as shown in Fig. 22 above and when G light is caused to enter the first area Ar1, B light is caused to enter the second area Ar2, and R light is caused to enter the third area Ar3 as in the above embodiments (see Fig. 3), a shiftable amount of the reproduction image cannot be maximized. That is, the shiftable amount of the reproduction image depends on the amount of bending of B light whose wavelength is shortest. However, when incident light is distributed in each area Ar as shown in Fig. 3, an incident area of B light is the second area Ar2 at the center, and thus the shiftable amount of the reproduction image cannot be maximized on the assumption that the reproduction image is shifted to the left side of the irradiation region Pr.

Therefore, in a modification example of the fifth embodiment, as shown in Fig. 26, light caused to enter each area Ar is allocated such that the wavelengths of the incident light are sequentially shorter from the area Ar (third area Ar3) located at an end in a direction opposite to the shift direction of the reproduction image toward the area Ar (first area Ar1) located at an end in the shift direction. Specifically, in a case where the reproduction image is shifted to the left side of the irradiation region Pr, R light is allocated to the third area Ar3, G light is allocated to the second area Ar2, and B light is allocated to the first area Ar1 as shown in the drawing.

Therefore, it is possible to minimize the amount of bending of B light required to emit the reproduction image to the region outside the irradiation region Pr. In other words, it is possible to increase the shiftable amount of the reproduction image as compared with a case where B light is incident on the second area Ar2 or the third area Ar3.

Therefore, in particular, in a case where it is desired to increase the shift amount of the reproduction image, for example, it is possible to appropriately emit the reproduction image of each wavelength band to the outside of the irradiation region of the 0th order light and to improve the image quality of the reproduction image.

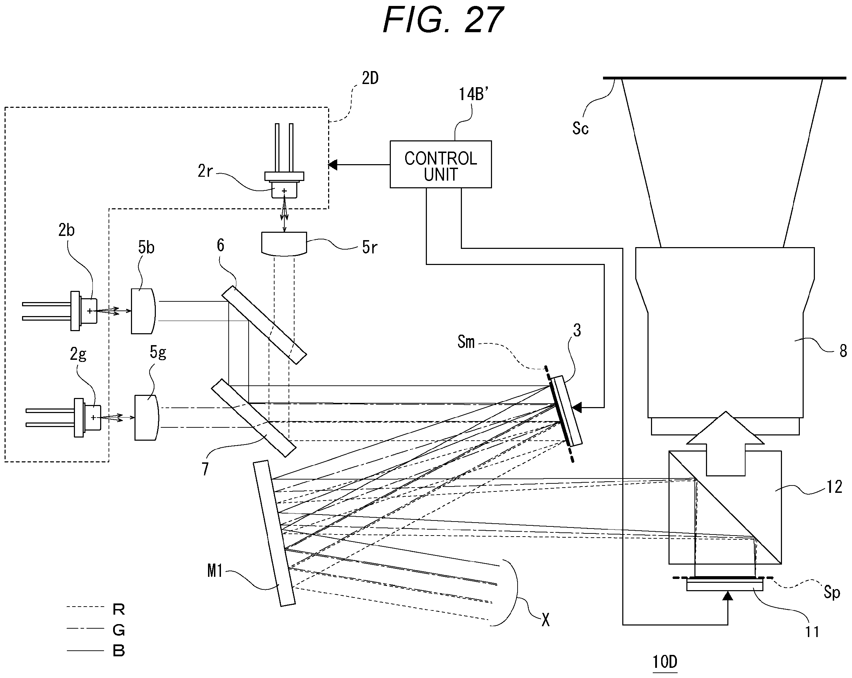

Fig. 27 shows a configuration example of a projector device 10D in the modification example of the fifth embodiment.

A difference from the projector device 10C of Fig. 24 is that B light and G light are incident on the first area Ar1 and the second area Ar2, respectively, in the phase modulator 3 by switching positions of the light emitting elements 2g and 2b from the case of the light emitting unit 2 as indicated by a light emitting unit 2D in the drawing.

Although not shown, in the projector device 10D in the modification example, the spatial light phase modulation in the first area Ar1 is performed on the basis of drive signal values based on a phase modulation pattern of B light obtained by the signal processing system of B light, that is, the signal processing system including the phase pattern calculation unit 41b, the phase/drive value conversion unit 42b, and the drive value compression unit 46b, and spatial light phase modulation in the second area Ar2 is performed on the basis of drive signal values based on a phase modulation pattern of G light obtained by the signal processing system of G light, that is, the signal processing system including the phase pattern calculation unit 41g, the phase/drive value conversion unit 42g, and the drive value compression unit 46g.

Here, in the above description, there has been described the example where the reproduction image shift configuration in the fifth embodiment (the configuration that emits the reproduction image to the outside of the irradiation region Pr) is applied to the projector device 10B of the fourth embodiment. However, the reproduction image shift configuration in the fifth embodiment is also suitably applicable to the projector devices 10 and 10A described in the second and third embodiments.

Further, in addition, not only the reproduction image shift configuration in the fifth embodiment, but also the configuration that performs the drive signal value compression processing described in the third embodiment and the configuration that performs the drive mode switching described in the fourth embodiment are also suitably applicable to the lighting device 1 described in the first embodiment.

<6. Sixth Embodiment>

In a sixth embodiment, a deviation of an optical axis of incident light on the phase modulator 3 is corrected.

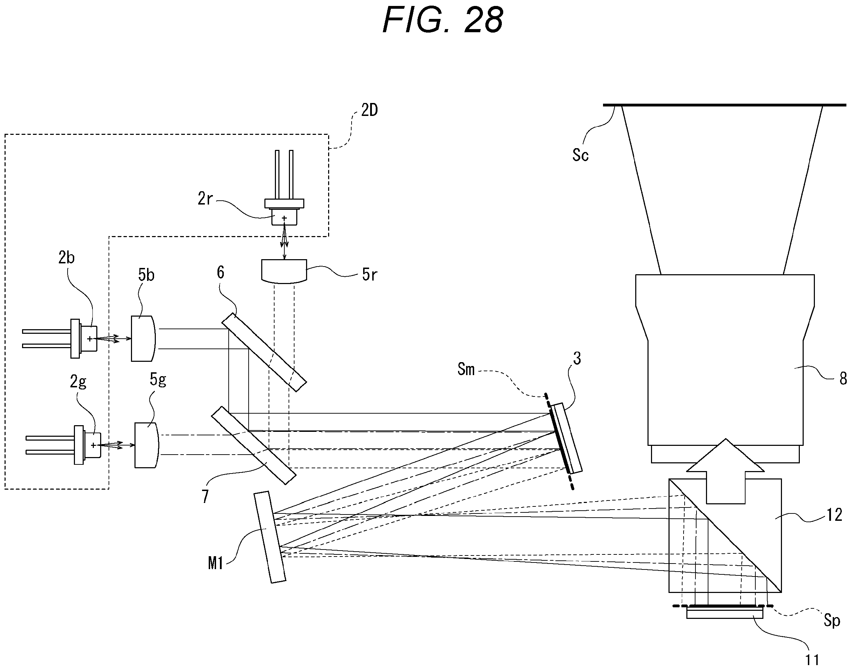

Fig. 28 shows a state of luminous fluxes of R light, G light, and B light in a case where an optical axis of incident light on the phase modulator 3 deviates for R light, G light, and B light.

The deviation of the optical axis of the incident light here means a deviation of an actual position of the optical axis of the incident light from a position of the optical axis of the incident light as a design value.

As shown in the drawing, in a case where the optical axis of the incident light on the phase modulator 3 deviates, a reproduction image cannot be emitted to a predetermined position on the reproduction surface Sp. When the optical axis of the incident light of at least one of R light, G light, and B light deviates, reproduction images of the respective colors cannot be superimposed on the same region on the reproduction surface Sp. Thus, the image quality of the reproduction images deteriorates.

Therefore, in the sixth embodiment, signal processing for cancelling the deviation of the optical axis of the incident light on the phase modulator 3 is performed. The signal processing here means signal processing performed in a process of generating a drive signal for the area Ar in the phase modulator 3.

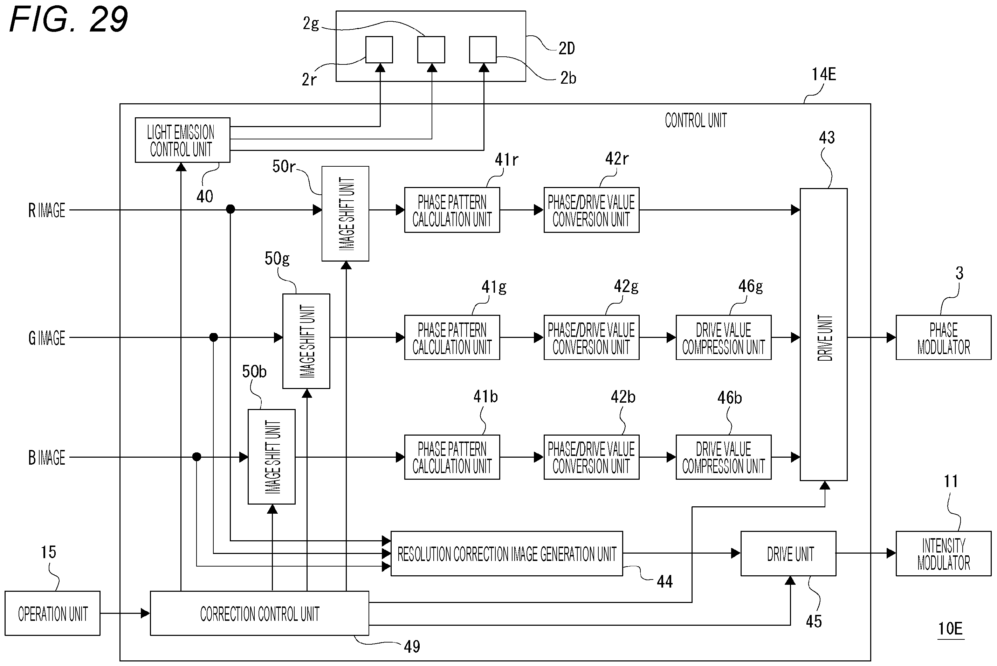

Fig. 29 shows a configuration example of a control unit 14E included in a projector device 10E in the sixth embodiment.

Note that a configuration of the projector device 10E other than the control unit 14E is similar to that of the projector device 10D in the modification example of the fifth embodiment described above with reference to Fig. 27, and thus redundant description is omitted.

The control unit 14E is different from the control unit 14B' of the projector device 10D described with reference to Fig. 27 (see Fig. 20 regarding the components) in that a correction control unit 49 and image shift units 50 provided corresponding to an R image, a G image, and a B image (image shift units 50r, 50g, and 50b) are added.

Note that the mode control unit 47 and the output switching unit 48 are also actually provided in the control unit 14E, but the mode control unit 47 and the output switching unit 48 are not shown in Fig. 29 for convenience of illustration. At this time, in a case where the correction control unit 49 includes a computer device, processing of the mode control unit 47 can be achieved by software processing of the correction control unit 49. That is, the processing of the mode control unit 47 and the processing of the correction control unit 49 are achieved by software processing by the common computer device.

The correction control unit 49 includes, for example, a microcomputer including a CPU, a ROM, and a RAM and can control operation of the light emission control unit 40, the drive unit 43, the drive unit 45, and the image shift units 50r, 50g, and 50b.

Further, operation input information is input to the correction control unit 49 from the user via the operation unit 15.

The correction control unit 49 controls at least the image shift units 50r, 50g, and 50b, thereby achieving the signal processing of cancelling the deviation of the optical axis of the incident light on the phase modulator 3 for R light, G light, and B light.

Here, in the present example, it is assumed that information indicating the deviation of the optical axis of the incident light on the phase modulator 3 for R light, G light, and B light has been obtained as optical axis deviation information Ia. The optical axis deviation information Ia here is information indicating a mode of the deviation of the optical axis of the incident light on the phase modulator 3 and specifically is information indicating a deviation direction and deviation amount of the optical axis in the present example.

The optical axis deviation information Ia of each of R light, G light, and B light may be obtained, for example, by arranging a test board on which a test pattern (e.g. a grid pattern) for measuring the deviation of the optical axis is displayed on the projection surface and a person visually measuring the deviation direction and the deviation amount of a reproduction image with respect to the test pattern when a reproduction image of only R light, a reproduction image of only G light, and a reproduction image of only B light are projected on the test board.

Alternatively, the optical axis deviation information Ia of the light of each color may be obtained, for example, on the basis of a result of measuring a position of an irradiation region of the light of each color with respect to the phase modulator 3 by using a dedicated measuring instrument or the like.

In any case, in the present example, it is assumed that the optical axis deviation information Ia regarding the light of each color has been acquired by some method.

Note that, as described later, the present embodiment proposes a method of measuring the deviation of the optical axis by displaying the test pattern on the intensity modulator 11 without using the test board, and processing of the correction control unit 49 for achieving the method will be described later.

In the correction control unit 49, the optical axis deviation information Ia for R light, G light, and B light is set by an operation input via the operation unit 15, for example.

The correction control unit 49 issues the optical axis deviation information Ia of R light to the image shift unit 50r, issues the optical axis deviation information Ia of G light to the image shift unit 50g, and issues the optical axis deviation information Ia of B light to the image shift unit 50b.

In a case where image reproduction based on an input image is performed, each image shift unit 50 performs processing of shifting each input image on the basis of the issued optical axis deviation information Ia.

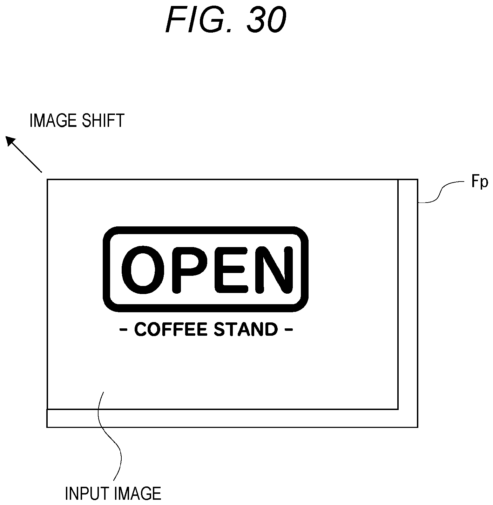

Fig. 30 is an explanatory diagram of the input image shift processing in the image shift unit 50.

An image frame Fp in the drawing shows an image frame of the input image. In the input image shift processing, the input image is shifted with respect to the image frame Fp in accordance with the optical axis deviation information Ia. Specifically, the input image is shifted in a direction opposite to the deviation direction of the optical axis indicated by the optical axis deviation information Ia by an amount corresponding to the deviation amount of the optical axis indicated by the optical axis deviation information Ia.

By performing such input image shift processing, it is possible to cancel the deviation of the optical axis of the incident light on the phase modulator 3 by signal processing.

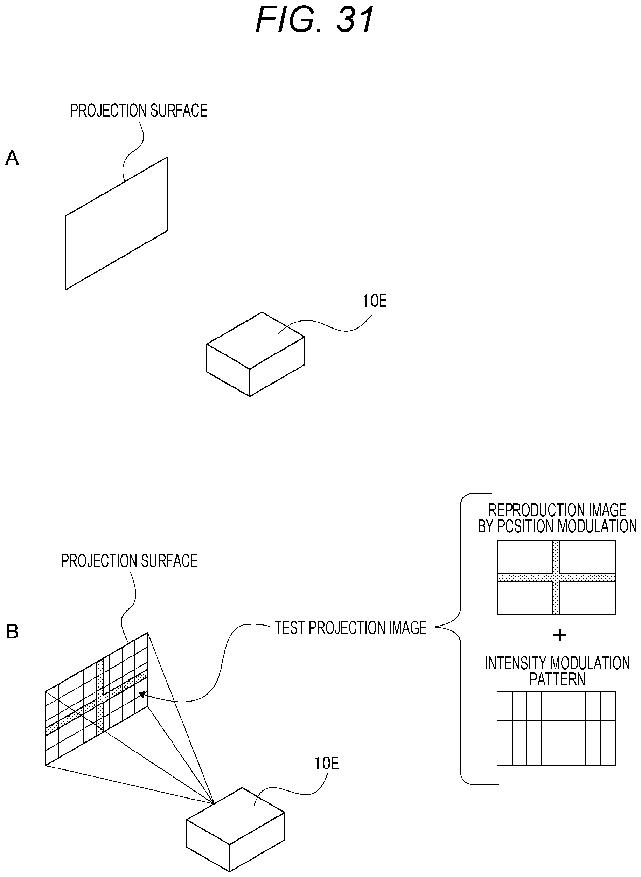

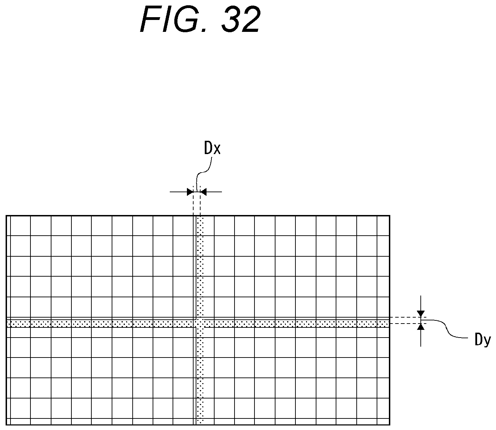

Here, the method of measuring the deviation of the optical axis in the present embodiment will be described with reference to Figs. 31 and 32.

First, as shown in Fig. 31A, the projector device 10E is arranged at a position facing a predetermined projection surface, and a test projection image is projected on the projection surface as shown in Fig. 31B. As shown in the drawing, the test projection image is projected as a combined image of an image by phase modulation (spatial light phase modulation) and an image by intensity modulation (spatial light intensity modulation). Specifically, the image by the phase modulation in this case is an image of a cross pattern as shown in the drawing, and the image by the intensity modulation is an image of a grid pattern.

The projection of the test projection image described above is performed by time division for R light, G light, and B light. Then, a person visually confirms the projected test projection image of each color and measures the deviation of the optical axis of R light, G light, and B light.

Fig. 32 shows a test projection image projected on the projection surface in a case where the optical axis of the incident light deviates.

In a case where the optical axis of the incident light deviates, the center of the cross pattern formed by the phase modulation deviates from the center of the grid pattern formed by the intensity modulation. The drawing shows an example where the center of the cross pattern deviates from the center of the grid pattern by "Dx" in a right direction and "Dy" in a downward direction.

By measuring such a deviation of the cross pattern from the grid pattern, it is possible to specify the deviation direction and the deviation amount for the deviation of the optical axis of the incident light on the phase modulator 3.

In order to measure the deviation of the optical axis described above, the correction control unit 49 performs the following processing.

First, the correction control unit 49 waits for an instruction to start measurement of the deviation of the optical axis. In the present example, it is assumed that the instruction to start measurement is issued in response to a user operation input via the operation unit 15. Therefore, the correction control unit 49 waits for the operation input.

In a case where the operation input for issuing an instruction to start measurement is performed, the correction control unit 49 performs processing for sequentially projecting the test projection images in predetermined order for R light, G light, and B light. At this time, in order to project a test projection image of a certain target color, the correction control unit 49 instructs the light emission control unit 40 to cause the light emitting element of the corresponding color in the light emitting unit 2 to emit light and controls the drive unit 43 to execute spatial light phase modulation for forming the reproduction image of the cross pattern in a predetermined region on the reproduction surface Sp in the corresponding area Ar. Further, the correction control unit 49 controls the drive unit 45 such that spatial light intensity modulation for forming the image by the grid pattern on the projection surface is performed in the intensity modulator 11.

By the processing of the correction control unit 49 described above, the test projection image shown in Fig. 31B is sequentially projected on the projection surface for R, G, and B colors, and thus it is possible to measure the deviation of the optical axis of the incident light on the phase modulator 3 for each of R light, G light, and B light.

Note that, in the above description, processing of shifting the input image to the phase pattern calculation unit 41 on the basis of the optical axis deviation information Ia is performed as the processing of cancelling the deviation of the optical axis. However, the processing of cancelling the deviation of the optical axis is not limited thereto and can be processing of shifting the phase modulation pattern calculated by the phase pattern calculation unit 41 on the basis of the optical axis deviation information Ia.

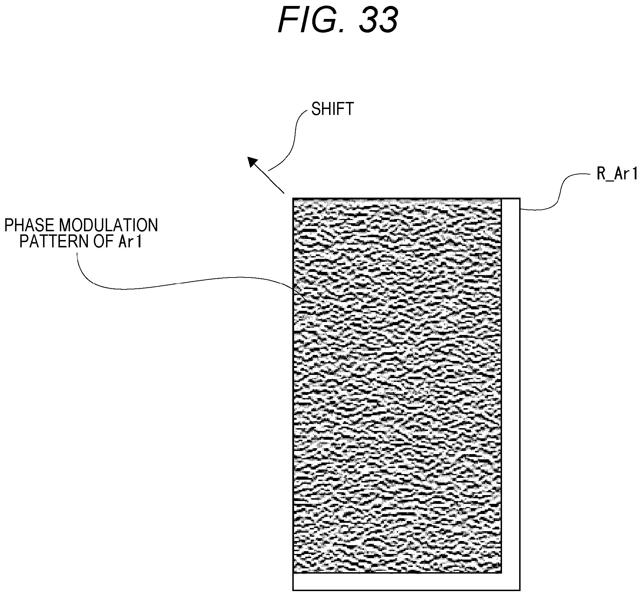

Fig. 33 is an explanatory diagram of the phase modulation pattern shift processing for cancelling the deviation of the optical axis.

Here, the phase modulation pattern shifting processing for the first area Ar1 is representatively shown, but the phase modulation pattern is also shifted for the other areas Ar in a similar manner.

In the drawing, a range indicated by "R_Ar1" schematically shows a pixel range of the first area Ar1. As shown in the drawing, a calculated phase modulation pattern is shifted with respect to the pixel range R_Ar1 of the first area Ar1 in a direction opposite to the deviation direction of the optical axis indicated by the optical axis deviation information Ia by an amount corresponding to the deviation amount of the optical axis indicated by the optical axis deviation information Ia.

Also by shifting the phase modulation pattern in this manner, the deviation of the optical axis of the incident light on the phase modulator 3 can be cancelled by signal processing as in the case where the input image is shifted.

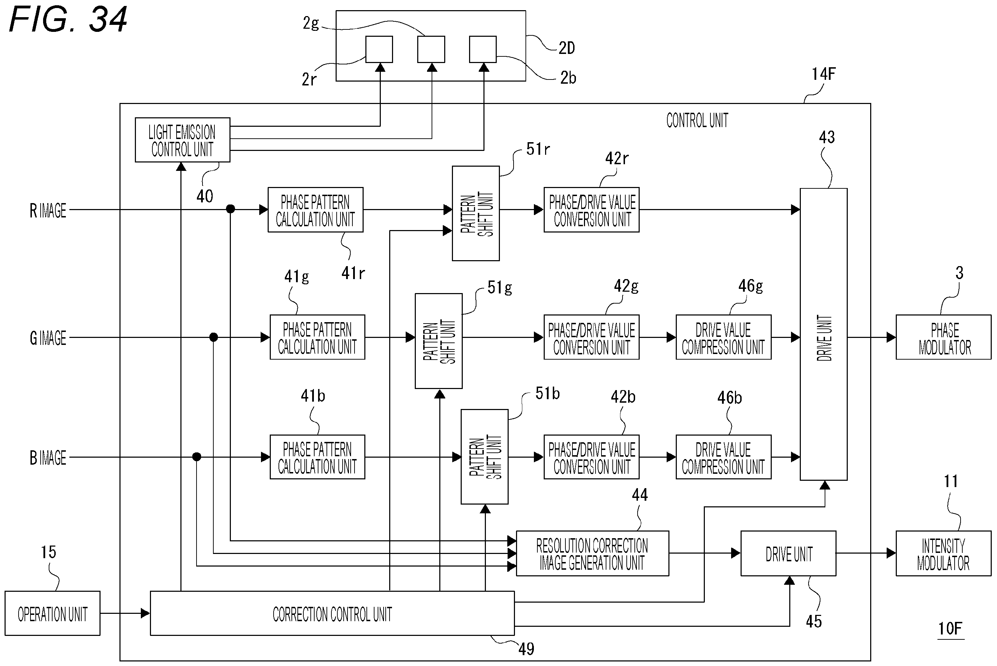

Fig. 34 shows a configuration example of a control unit 14F included in a projector device 10F in a modification example of the sixth embodiment which cancels the deviation of the optical axis by the phase modulation pattern shift processing described above.

The projector device 10F is different from the projector device 10E in that the control unit 14F is provided instead of the control unit 14E.

The control unit 14F is different from the control unit 14E in that pattern shift units 51 for the respective colors (hereinafter, pattern shift units 51r, 51g, and 51b for the respective colors) are provided instead of the image shift units 50r, 50g, and 50b being omitted.

The correction control unit 49 in this case issues the optical axis deviation information Ia of R light to the pattern shift unit 51r, issues the optical axis deviation information Ia of G light to the pattern shift unit 51g, and issues the optical axis deviation information Ia of B light to the pattern shift unit 51b.

In a case where image reproduction based on the input image is performed, each pattern shift unit 51 performs processing of shifting the phase modulation pattern input from the phase pattern calculation unit 41 of the corresponding color on the basis of the issued optical axis deviation information Ia.

Note that, in the above description, the configuration for cancelling the deviation of the optical axis in the sixth embodiment is applied to the fifth embodiment. However, the configuration for cancelling the deviation of the optical axis is also applicable to any of the configurations of the first to fifth embodiments described above.

Further, in the above description, the configuration for performing the processing of cancelling the deviation of the optical axis for all the colors of R, G, and B has been described. However, the processing of cancelling the deviation of the optical axis is only required to be performed for at least one target color (area Ar). For example, in a case where the optical axis does not deviate (or can be ignored) in a specific area Ar, the configuration for performing the processing of cancelling the deviation of the optical axis may be adopted only for the other areas Ar excluding the specific area Ar.

<7. Seventh Embodiment>

In a seventh embodiment, a diffusion plate is used to defocus a reproduction image.

Here, in a case where a reproduction image is formed by the phase modulator 3, an intensity distribution of light incident on the phase modulator 3 may not be uniform, in other words, light intensity may become uneven due to, for example, a degree of collimation in the collimation lens 5. In a case where the intensity of the incident light on the phase modulator 3 becomes uneven as described above, random noise is superimposed on the reproduction image due to this unevenness. Further, such random noise in the reproduction image may also be generated by a phase modulation pattern set in each area Ar.

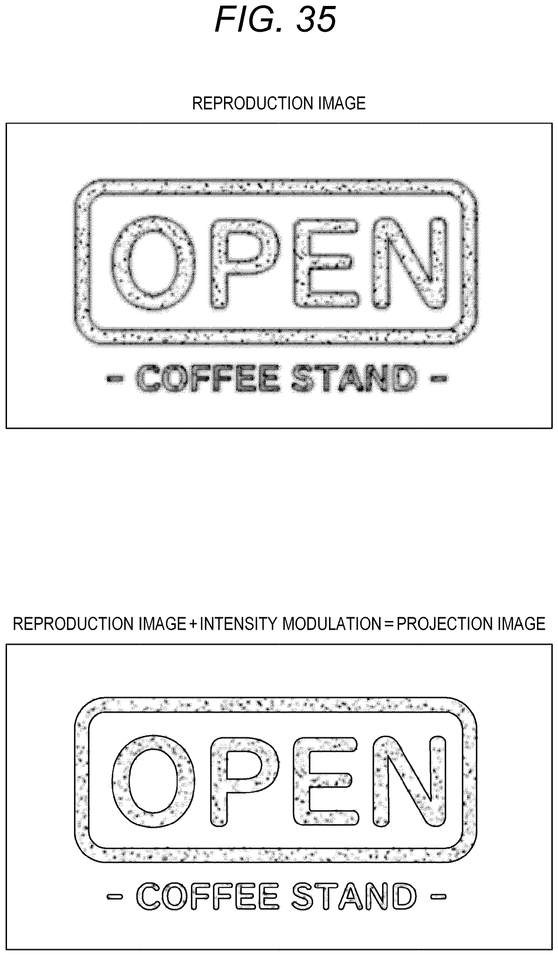

Fig. 35 shows an image of random noise generated in the reproduction image and an image of a projection image in which noise caused by the random noise is generated.

In the seventh embodiment, a method of defocusing the reproduction image by the diffusion plate is adopted to suppress deterioration in image quality of the projection image caused by the random noise generated in the reproduction image.

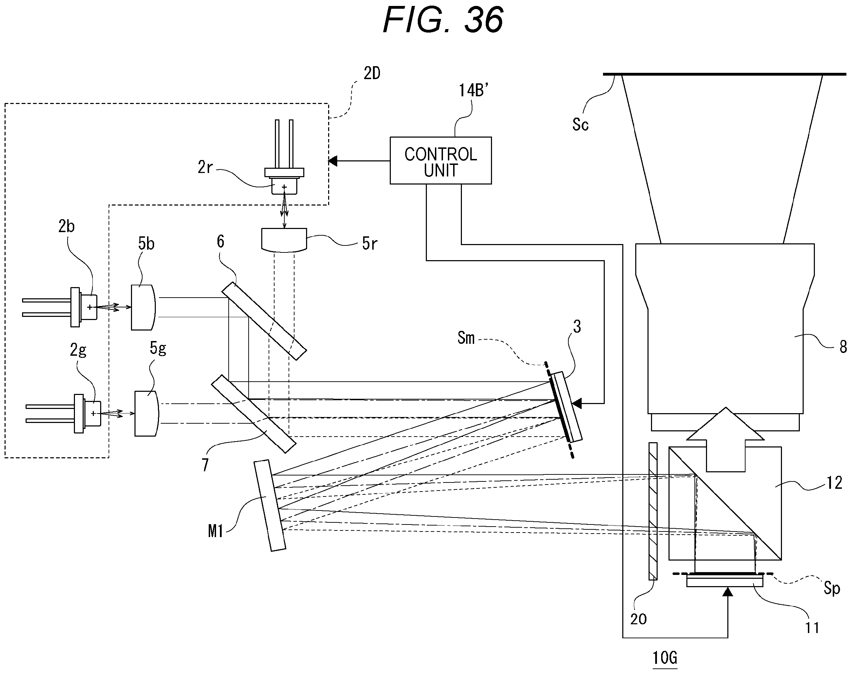

Fig. 36 shows a configuration example of a projector device 10G in the seventh embodiment.

Here, a configuration in which a diffusion plate is added to the projector device 10D of Fig. 27 above will be described as an example of the projector device 10G.

As shown in the drawing, the projector device 10G is different from the projector device 10D in that a diffusion plate 20 is inserted into an optical path from the phase modulator 3 to the intensity modulator 11. Specifically, in the present example, the diffusion plate 20 is inserted into the optical path between the first mirror M1 and the polarization beam splitter 12.

The diffusion plate 20 can defocus reproduction images of R light, G light, and B light.

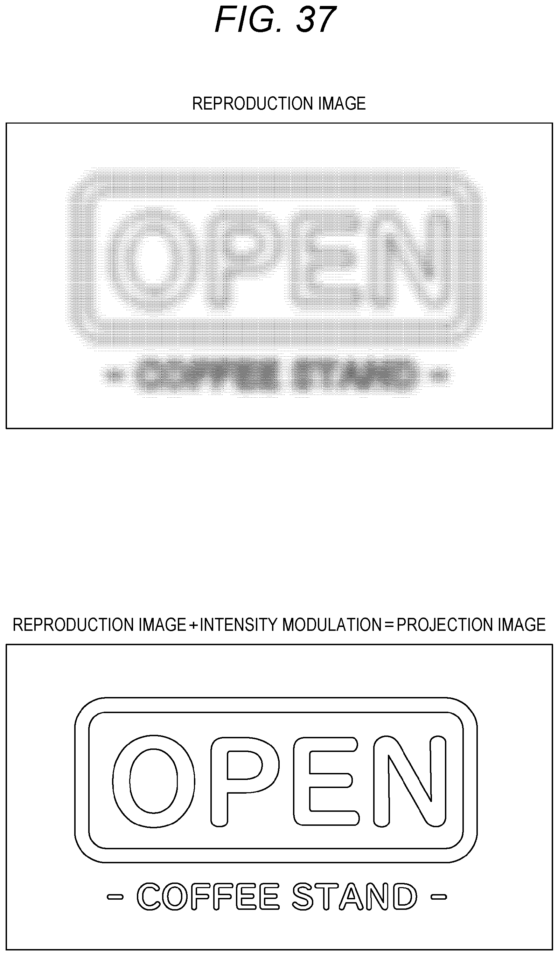

Fig. 37 is an explanatory diagram of an effect of defocusing a reproduction image and shows an image of the defocused reproduction image and an image of a projection image obtained by causing the intensity modulator 11 to perform spatial light intensity modulation on the defocused reproduction image.

As can be seen by comparing Fig. 37 with Fig. 35 above, when the reproduction image is defocused, the random noise in the reproduction image is less noticeable, and thus the noise in the projection image is also reduced. That is, the image quality of the projection image is improved.

Note that the seventh embodiment is also suitably applicable to a case where the deviation of the optical axis of the incident light on the phase modulator 3 is corrected as in the sixth embodiment.


<8. Modification Examples>

Here, the embodiments are not limited to the above specific examples, and configurations can be adopted as various modification examples.

For example, in the above description, three types of light, i.e., R light, G light, and B light have been shown as an example of a "plurality of light beams of different wavelength bands" incident on the phase modulator 3 for image reproduction. However, the "plurality of light beams of different wavelength bands" is not limited to R light, G light, and B light and may be light of intermediate colors such as cyan and magenta. Further, the "plurality of light beams of different wavelength bands" may include light in an invisible light band such as infrared (IR) light.

Furthermore, the number of the "plurality of light beams of different wavelength bands" is not limited to three and is only required to be at least two or more. In other words, the number of divided areas Ar in the phase modulator 3 is not limited to three and is only required to be two or more.

Further, in the above description, the area Ar in the phase modulator 3 is assumed to be equally divided, but may be unequally divided.

Further, in the above description, the example where a reflective phase modulator is used as the phase modulator 3 has been described, but a transmission phase modulator can also be used.

Similarly, the example where a reflective intensity modulator is used as the intensity modulator 11 has been described, but a transmission intensity modulator can also be used.

Further, regarding the light emitting unit 2, the example where a semiconductor laser is used for the light emitting element has been described. However, as a light source for emitting the "plurality of light beams of different wavelength bands" to the phase modulator 3, for example, a light source other than the semiconductor laser, such as a light emitting diode (LED) or an ultrahigh pressure mercury lamp (UHP lamp), can also be used.

Further, in the above description, the example where spatial light phase modulation is performed on the basis of the freeform method, that is, on the assumption of use of a refraction phenomenon of light has been described as an example of spatial light phase modulation for reproducing a desired light intensity distribution on the reproduction surface Sp. However, the present technology is also suitably applicable to a case where spatial light phase modulation is performed by a method based on the assumption of use of a diffraction phenomenon of light such as a computer-generated hologram (CGH) .

<9. Summary of Embodiments>

As described above, a lighting device (lighting device 1; projector devices 10, 10A, 10B, 10C, 10D, 10E, 10F, and 10G) in an embodiment includes: a light emitting unit (light emitting units 2 and 2D) that emits a plurality of light beams of different wavelength bands; a phase modulator (phase modulator 3) that performs spatial light phase modulation on incident light beams from the light emitting unit and in which the light beams of the different wavelength bands are incident from the light emitting unit on respective phase modulation areas (areas Ar) that are areas into which a phase modulation surface on which the spatial light phase modulation is performed is divided; and a control unit (control units 4, 14, 14A, 14B, 14B', 14E, and 14F) that simultaneously executes the spatial light phase modulation in the phase modulation areas in a state in which the light beams of the corresponding wavelength bands are incident on the respective phase modulation areas.

According to the above configuration, for example, in a case where images by the light beams of the different wavelength bands such as R light, G light, and B light are combined on a predetermined reproduction surface to obtain a reproduction image, it is unnecessary to perform the spatial light phase modulation on the light beams of the respective wavelength bands by time division.

Therefore, the light beams of the respective wavelength bands do not need to be incident on the phase modulator by time division, and the luminance of the reproduction image can be improved. Further, according to the above configuration, it is unnecessary to provide the phase modulator for each wavelength band. This makes it possible to prevent an increase in size and cost of the optical system. Therefore, it is possible to improve the luminance of the reproduction image while reducing the size and cost of the optical system.

Further, in the lighting device in the embodiment, the control unit performs drive control for the each phase modulation area of the phase modulator such that images of the respective wavelength bands generated by the spatial light phase modulation in the respective phase modulation areas are superimposed on a same region on a reproduction surface (see Figs. 4 to 8).

Therefore, even in a case where the spatial light phase modulation is performed for each phase modulation area, it is possible to superimpose and reproduce the images of the respective wavelength bands on the same region on the reproduction surface of the images.

For example, in a case where R light, G light, and B light are used as the light beams of the different wavelength bands, R, G, and B images are superimposed on the same region of the reproduction surface, and a reproduction image can be appropriately obtained as a full-color image.

Further, in the lighting device in the embodiment, the control unit adjusts a color balance of a reproduction image obtained by the spatial light phase modulation for the each phase modulation area by controlling an amount of light emission for the light beams of the respective wavelength bands in the light emitting unit (see Fig. 11).

Unlike intensity modulation (spatial light intensity modulation), the spatial light phase modulation does not have a function of attenuating incident light. Therefore, as described above, the color balance of the reproduction image can be adjusted by controlling the amount of light emission for the light beams of the respective wavelength bands in the light emitting unit.

Controlling the amount of light emission eliminates the necessity of separately providing an optical component such as a liquid crystal panel for attenuating light in an optical path in the color balance adjustment, and it is possible to reduce the size and cost of the optical system by reducing the number of components.

Furthermore, in the lighting device in the embodiment, the control unit (control units 14A, 14B, 14B', 14E, and 14F) performs drive signal value compression processing for at least the phase modulation area on which a light beam of a shortest wavelength band is incident among the plurality of light beams of the different wavelength bands.

Generally, in the phase modulator, an amount of change in phase with respect to the same drive signal value increases as the wavelength of the incident light is shorter. Therefore, the drive signal value compression processing is performed such that the amount of change in phase becomes equal to the amount of change for light of another wavelength band.

Therefore, it is possible to prevent the amount of phase modulation from being different due to a difference in the wavelength band and to obtain an appropriate reproduction image according to an input image (target image).

Further, in the lighting device according to the embodiment, the control unit (control units 14B, 14B', 14E, and 14F) is configured to switch between a simultaneous driving mode and a time-division driving mode, the simultaneous driving mode being a mode in which the spatial light phase modulation is simultaneously executed in the phase modulation areas in a state in which the light beams of the corresponding wavelength bands are incident on the respective phase modulation areas, the time-division driving mode being a mode in which the spatial light phase modulation is performed on the light beams of the different wavelength bands by time division in the phase modulator by causing the light beams of the different wavelength bands to enter the phase modulator by time division.

Therefore, the simultaneous driving mode can be selected in a case where the luminance of the reproduction image is prioritized, and the time-division driving mode can be selected in a case where suppression of color unevenness of the reproduction image is prioritized.

Therefore, it is possible to perform appropriate image reproduction according to each request such as prioritizing luminance and prioritizing suppression of color unevenness.

Further, in the lighting device in the embodiment, the control unit (control units 14B', 14E, and 14F) performs drive control for the each phase modulation area in the phase modulator such that a reproduction image by the each phase modulation area is emitted to a region outside an irradiation region of 0th order light of the phase modulator on a reproduction surface.

Therefore, it is possible to prevent a component of the 0th order light from being superimposed on the reproduction image on the reproduction surface.

Accordingly, it is possible to prevent the component of the 0th order light from being superimposed as noise on the reproduction image and to improve the image quality of the reproduction image.

Furthermore, in the lighting device (projector devices 10D and 10G) in the embodiment, light beams are incident on the phase modulator such that wavelengths of the incident light beams are sequentially shorter from the phase modulation area located at an end in a direction opposite to a shift direction of the reproduction image for emitting the reproduction image to the outside of the irradiation region of the 0th order light toward the phase modulation area located at an end in the shift direction.

In the spatial light phase modulation, the amount of bending of light tends to decrease as the wavelength of the incident light beam decreases. According to the above configuration, for the plurality of light beams of the different wavelength bands, the amount of bending of light for emitting the reproduction image to the outside of the 0th order light irradiation region can be reduced as the light beam has a shorter wavelength band.

Therefore, it is possible to appropriately emit the reproduction image of each wavelength band to the outside of the 0th order light irradiation region and to improve the image quality of the reproduction image.

Further, in the lighting device in the embodiment, based on optical axis deviation information indicating a mode of a deviation of an optical axis of the incident light beam on a target phase modulation area that is at least one of the phase modulation areas, the control unit (control units 14E and 14F) performs signal processing for cancelling the deviation of the optical axis for the target phase modulation area in processing of generating a drive signal of the target phase modulation area.

When the optical axis of the incident light beam deviates in at least one phase modulation area, the images of the respective wavelength bands cannot be superimposed on the same region on the reproduction surface. Therefore, as described above, the signal processing for cancelling the deviation of the optical axis is performed on the target phase modulation area on the basis of the optical axis deviation information of the incident light.

Accordingly, even in a case where the optical axis of the incident light beam on the phase modulation area deviates, it is possible to superimpose the images of the respective wavelength bands on the same region on the reproduction surface and to obtain an appropriate reproduction image.

Further, when the deviation of the optical axis is cancelled as signal processing in the drive signal generation, it is unnecessary to separately provide an optical component for correcting the deviation of the optical axis, and it is possible to reduce the size and cost of the optical system.

Furthermore, in the lighting device in the embodiment, the light emitting unit the light emitting unit emits R light, G light, and B light as the plurality of lights of the different wavelength bands, and the phase modulator has the phase modulation area on which the R light is incident, the phase modulation area on which the G light is incident, and the phase modulation area on which the B light is incident.

Therefore, it is possible to obtain a reproduction image on the reproduction surface as a full-color image.

The projector device (projector devices 10, 10A, 10B, 10C, 10D, 10E, 10F, and 10G) according to the embodiment includes: a light emitting unit that emits a plurality of light beams of different wavelength bands; a phase modulator that performs spatial light phase modulation on incident light beams from the light emitting unit and in which the light beams of the different wavelength bands are incident from the light emitting unit on respective phase modulation areas that are areas into which a phase modulation surface on which the spatial light phase modulation is performed is divided; an intensity modulator (intensity modulator 11) that performs spatial light intensity modulation on the light beams incident via the phase modulator; a projection lens (projection lens 8) that projects the light beams subjected to the spatial light intensity modulation by the intensity modulator on a projection surface; and a control unit (control units 14, 14A, 14B, 14B', 14E, and 14F) that simultaneously executes the spatial light phase modulation in the phase modulation areas in a state in which the light beams of the corresponding wavelength bands are incident on the respective phase modulation areas.

Such a projector device can also have functions and effects similar to those of the lighting device in the above embodiment.

Further, in the projector device according to the embodiment, the control unit generates, on the basis of an input image, a resolution correction image for correcting a resolution of a reproduction image generated by the phase modulator performing the spatial light phase modulation and performs drive control of the intensity modulator on the basis of the resolution correction image.

Therefore, the reproduction image by the phase modulator is subjected to resolution correction for improving the resolution by the spatial light intensity modulation in the intensity modulator, and thus it is possible to project the reproduction image subjected to the resolution correction on the projection surface via the projection lens.

Accordingly, the image quality of the projection image can be improved.

Further, in the projector device (projector device 10G) in the embodiment, a diffusion plate (diffusion plate 20) is inserted into an optical path from the phase modulator to the intensity modulator.

The above diffusion plate can defocus the reproduction image emitted from the phase modulator to the intensity modulator.

By defocusing the reproduction image emitted to the intensity modulator as described above, it is possible to make noise generated in the reproduction image less noticeable, and thus it is possible to prevent the image quality of the projection image from deteriorating because the noise is reflected in the projection image.

Note that effects described in the present description are merely examples and are not limited, and other effects may be provided.

<10. Present Technology>

The present technology may also have the following configurations.

(1) A lighting device including:

a light emitting unit that emits a plurality of light beams of different wavelength bands;
a phase modulator that performs spatial light phase modulation on incident light beams from the light emitting unit and in which the light beams of the different wavelength bands are incident from the light emitting unit on respective phase modulation areas that are areas into which a phase modulation surface on which the spatial light phase modulation is performed is divided; and
a control unit that simultaneously executes the spatial light phase modulation in the phase modulation areas in a state in which the light beams of the corresponding wavelength bands are incident on the respective phase modulation areas.

(2) The lighting device according to (1), in which

the control unit
performs drive control for the each phase modulation area of the phase modulator such that images of the respective wavelength bands generated by the spatial light phase modulation in the respective phase modulation areas are superimposed on a same region on a reproduction surface.

(3) The lighting device according to (1) or (2), in which

the control unit
adjusts a color balance of a reproduction image obtained by the spatial light phase modulation for the each phase modulation area by controlling an amount of light emission for the light beams of the respective wavelength bands in the light emitting unit.

(4) The lighting device according to any one of (1) to (3), in which

the control unit
performs drive signal value compression processing for at least the phase modulation area on which a light beam of a shortest wavelength band is incident among the plurality of light beams of the different wavelength bands.

(5) The lighting device according to any one of (1) to (4), in which

the control unit is
configured to switch between a simultaneous driving mode and a time-division driving mode, the simultaneous driving mode being a mode in which the spatial light phase modulation is simultaneously executed in the phase modulation areas in a state in which the light beams of the corresponding wavelength bands are incident on the respective phase modulation areas, the time-division driving mode being a mode in which the spatial light phase modulation is performed on the light beams of the different wavelength bands by time division in the phase modulator by causing the light beams of the different wavelength bands to enter the phase modulator by time division.

(6) The lighting device according to any one of (1) to (5), in which

the control unit
performs drive control for the each phase modulation area in the phase modulator such that a reproduction image by the each phase modulation area is emitted to a region outside an irradiation region of 0th order light of the phase modulator on a reproduction surface.

(7) The lighting device according to (6), in which
light beams are incident on the phase modulator such that wavelengths of the incident light beams are sequentially shorter from the phase modulation area located at an end in a direction opposite to a shift direction of the reproduction image for emitting the reproduction image to the outside of the irradiation region of the 0th order light toward the phase modulation area located at an end in the shift direction.
(8) The lighting device according to any one of (1) to (7), in which
based on optical axis deviation information indicating a mode of a deviation of an optical axis of the incident light beam on a target phase modulation area that is at least one of the phase modulation areas, the control unit performs signal processing for cancelling the deviation of the optical axis for the target phase modulation area in processing of generating a drive signal of the target phase modulation area.
(9) The lighting device according to any one of (1) to (8), in which

the light emitting unit emits R light, G light, and B light as the plurality of lights of the different wavelength bands, and
the phase modulator has the phase modulation area on which the R light is incident, the phase modulation area on which the G light is incident, and the phase modulation area on which the B light is incident.

(10) A projector device including:

a light emitting unit that emits a plurality of light beams of different wavelength bands;
a phase modulator that performs spatial light phase modulation on incident light beams from the light emitting unit and in which the light beams of the different wavelength bands are incident from the light emitting unit on respective phase modulation areas that are areas into which a phase modulation surface on which the spatial light phase modulation is performed is divided;
an intensity modulator that performs spatial light intensity modulation on the light beams incident via the phase modulator;
a projection lens that projects the light beams subjected to the spatial light intensity modulation by the intensity modulator on a projection surface; and
a control unit that simultaneously executes the spatial light phase modulation in the phase modulation areas in a state in which the light beams of the corresponding wavelength bands are incident on the respective phase modulation areas.

(11) The projector device according to (10), in which

the control unit
generates, on the basis of an input image, a resolution correction image for correcting a resolution of a reproduction image generated by the phase modulator performing the spatial light phase modulation and performs drive control of the intensity modulator on the basis of the resolution correction image.

(12) The projector device according to (10) or (11), in which
a diffusion plate is inserted into an optical path from the phase modulator to the intensity modulator.

REFERENCE SIGNS LIST

1 Lighting device
10, 10A, 10B, 10C, 10D, 10E, 10F Projector device
2, 2D Light emitting unit
2r, 2g, 2b Light emitting element
3 Phase modulator
4, 14, 14A, 14B, 14B', 14E, 14F Control unit
5r, 5g, 5b Collimation lens
6 First dichroic mirror
7 Second dichroic mirror
8 Projection lens
M1 First mirror
M2 Second mirror
Sm Phase modulation surface
Sc Screen
Sp Reproduction surface
Ar Area (phase modulation area)
Dpr Basic phase distribution
Dpa, Dpa1, Dpa2, Dpa3 Area basic phase distribution
Dpl, Dpl-2, Dpl-2, Dpl-3 Lens component
Dpd Area phase distribution
40 Light emission control unit
41, 41r, 41g, 41b Phase pattern calculation unit
42, 42r, 42g, 42b Phase/drive value conversion unit
43 Drive unit
44 Resolution correction image generation unit
45 Drive unit
11 Intensity modulator
12 Polarization beam splitter
15 Operation unit
46, 46g, 46b Drive value compression unit
47 Mode control unit
48 Output switching unit
49 Correction control unit
50, 50r, 50g, 50b Image shift unit
51, 51r, 51g, 51b Pattern shift unit
Fp Image frame
R_Ar1 Pixel range
20 Diffusion plate

**Claims**

1. A lighting device comprising:

a light emitting unit that emits a plurality of light beams of different wavelength bands;
a phase modulator that performs spatial light phase modulation on incident light beams from the light emitting unit and in which the light beams of the different wavelength bands are incident from the light emitting unit on respective phase modulation areas that are areas into which a phase modulation surface on which the spatial light phase modulation is performed is divided; and
a control unit that simultaneously executes the spatial light phase modulation in the phase modulation areas in a state in which the light beams of the corresponding wavelength bands are incident on the respective phase modulation areas.

2. The lighting device according to claim 1, wherein

the control unit
performs drive control for the each phase modulation area of the phase modulator such that images of the respective wavelength bands generated by the spatial light phase modulation in the respective phase modulation areas are superimposed on a same region on a reproduction surface.

3. The lighting device according to claim 1, wherein

the control unit
adjusts a color balance of a reproduction image obtained by the spatial light phase modulation for the each phase modulation area by controlling an amount of light emission for the light beams of the respective wavelength bands in the light emitting unit.

4. The lighting device according to claim 1, wherein

the control unit
performs drive signal value compression processing for at least the phase modulation area on which a light beam of a shortest wavelength band is incident among the plurality of light beams of the different wavelength bands.

5. The lighting device according to claim 1, wherein

the control unit is
configured to switch between a simultaneous driving mode and a time-division driving mode, the simultaneous driving mode being a mode in which the spatial light phase modulation is simultaneously executed in the phase modulation areas in a state in which the light beams of the corresponding wavelength bands are incident on the respective phase modulation areas, the time-division driving mode being a mode in which the spatial light phase modulation is performed on the light beams of the different wavelength bands by time division in the phase modulator by causing the light beams of the different wavelength bands to enter the phase modulator by time division.

6. The lighting device according to claim 1, wherein

the control unit
performs drive control for the each phase modulation area in the phase modulator such that a reproduction image by the each phase modulation area is emitted to a region outside an irradiation region of 0th order light of the phase modulator on a reproduction surface.

7. The lighting device according to claim 6, wherein
light beams are incident on the phase modulator such that wavelengths of the incident light beams are sequentially shorter from the phase modulation area located at an end in a direction opposite to a shift direction of the reproduction image for emitting the reproduction image to the outside of the irradiation region of the 0th order light toward the phase modulation area located at an end in the shift direction.

8. The lighting device according to claim 1, wherein
based on optical axis deviation information indicating a mode of a deviation of an optical axis of the incident light beam on a target phase modulation area that is at least one of the phase modulation areas, the control unit performs signal processing for cancelling the deviation of the optical axis for the target phase modulation area in processing of generating a drive signal of the target phase modulation area.

9. The lighting device according to claim 1, wherein

the light emitting unit emits R light, G light, and B light as the plurality of lights of the different wavelength bands, and
the phase modulator has the phase modulation area on which the R light is incident, the phase modulation area on which the G light is incident, and the phase modulation area on which the B light is incident.

10. A projector device comprising:

a light emitting unit that emits a plurality of light beams of different wavelength bands;
a phase modulator that performs spatial light phase modulation on incident light beams from the light emitting unit and in which the light beams of the different wavelength bands are incident from the light emitting unit on respective phase modulation areas that are areas into which a phase modulation surface on which the spatial light phase modulation is performed is divided;
an intensity modulator that performs spatial light intensity modulation on the light beams incident via the phase modulator;
a projection lens that projects the light beams subjected to the spatial light intensity modulation by the intensity modulator on a projection surface; and
a control unit that simultaneously executes the spatial light phase modulation in the phase modulation areas in a state in which the light beams of the corresponding wavelength bands are incident on the respective phase modulation areas.

11. The projector device according to claim 10, wherein

the control unit
generates, on a basis of an input image, a resolution correction image for correcting a resolution of a reproduction image generated by the phase modulator performing the spatial light phase modulation and performs drive control of the intensity modulator on a basis of the resolution correction image.

12. The projector device according to claim 10, wherein
a diffusion plate is inserted into an optical path from the phase modulator to the intensity modulator.

FIG. 1

1 (LIGHTING DEVICE)

# FIG. 2

PHASE DISTRIBUTION

# FIG. 3

Ar1    Ar2    Ar3

------- R
--- G
—— B

# FIG. 4

EP 4 485 067 A1

# FIG. 5

PHASE MODULATABLE REGION

IRRADIATION REGION

DOMAIN Dm

$\Delta x$

$\Delta y$

f

EP 4 485 067 A1

FIG. 6

*FIG. 7*

# FIG. 8

EP 4 485 067 A1

# FIG. 9

| | | 1 FRAME | | |
|---|---|---|---|---|
| LIGHT EMITTING UNIT | RED LIGHT SOURCE | R | R | |
| | GREEN LIGHT SOURCE | G | G | |
| | BLUE LIGHT SOURCE | B | B | |
| PHASE MODULATOR | RED REGION | R | R | |
| | GREEN REGION | G | G | |
| | BLUE REGION | B | B | |

TIME

**FIG. 10**

EP 4 485 067 A1

## FIG. 11

FIG. 12

# FIG. 13

| | | 1 FRAME | |
|---|---|---|---|
| LIGHT EMITTING UNIT | RED LIGHT SOURCE | R | R |
| | GREEN LIGHT SOURCE | G | G |
| | BLUE LIGHT SOURCE | B | B |
| PHASE MODULATOR | RED REGION | R | R |
| | GREEN REGION | G | G |
| | BLUE REGION | B | B |
| INTENSITY MODULATOR | | RESOLUTION CORRECTION IMAGE | RESOLUTION CORRECTION IMAGE |

TIME

## FIG. 14

LIGHT EMISSION CONTROL UNIT — 40

CONTROL UNIT — 14

R IMAGE

G IMAGE

B IMAGE

PHASE PATTERN CALCULATION UNIT — 41r
PHASE/DRIVE VALUE CONVERSION UNIT — 42r

PHASE PATTERN CALCULATION UNIT — 41g
PHASE/DRIVE VALUE CONVERSION UNIT — 42g

PHASE PATTERN CALCULATION UNIT — 41b
PHASE/DRIVE VALUE CONVERSION UNIT — 42b

DRIVE UNIT — 43

RESOLUTION CORRECTION IMAGE GENERATION UNIT — 44

DRIVE UNIT — 45

PHASE MODULATOR — 3

INTENSITY MODULATOR — 11

EP 4 485 067 A1

# FIG. 15

# FIG. 16

A

0-255

AMOUNT OF PHASE MODULATION ($\pi$)

$2\pi$

DRIVE SIGNAL VALUE (8bit)

B

76-255

AMOUNT OF PHASE MODULATION ($\pi$)

$2\pi$

DRIVE SIGNAL VALUE (8bit)

C

121-255

AMOUNT OF PHASE MODULATION ($\pi$)

$2\pi$

DRIVE SIGNAL VALUE (8bit)

-------- R
—·—·— G
———— B

EP 4 485 067 A1

FIG. 17

EP 4 485 067 A1

# FIG. 18

# FIG. 19

LUMINANCE-PRIORITIZED MODE

COLOR MIXING SUPPRESSION MODE

SWITCHING

EP 4 485 067 A1

FIG. 20

EP 4 485 067 A1

# FIG. 21

# FIG. 22

# FIG. 23

EP 4 485 067 A1

# FIG. 24

EP 4 485 067 A1

# FIG. 25

# FIG. 26

*FIG. 27*

FIG. 28

EP 4 485 067 A1

FIG. 29

EP 4 485 067 A1

# FIG. 30

IMAGE SHIFT

Fp

OPEN

– COFFEE STAND –

INPUT IMAGE

# FIG. 31

A

PROJECTION SURFACE

10E

B

PROJECTION SURFACE

TEST PROJECTION IMAGE

10E

REPRODUCTION IMAGE
BY POSITION MODULATION

+

INTENSITY MODULATION
PATTERN

# FIG. 32

# FIG. 33

SHIFT

R_Ar1

PHASE MODULATION
PATTERN OF Ar1

FIG. 34

# FIG. 35

REPRODUCTION IMAGE

REPRODUCTION IMAGE + INTENSITY MODULATION = PROJECTION IMAGE

## FIG. 36

EP 4 485 067 A1

# FIG. 37

REPRODUCTION IMAGE

REPRODUCTION IMAGE+INTENSITY MODULATION=PROJECTION IMAGE

## INTERNATIONAL SEARCH REPORT

| International application No. |
| --- |
| **PCT/JP2023/003591** |

### A. CLASSIFICATION OF SUBJECT MATTER

*G03B 21/00*(2006.01)i; *G03B 21/14*(2006.01)i; *F21V 23/00*(2015.01)i; *F21Y 113/10*(2016.01)n; *F21Y 115/30*(2016.01)n; *F21S 2/00*(2016.01)i; *H05B 47/105*(2020.01)i; *H05B 47/155*(2020.01)i; *H05B 47/16*(2020.01)i; *H05B 47/165*(2020.01)i; *H05B 47/17*(2020.01)i; *H04N 5/74*(2006.01)i; *H04N 9/31*(2006.01)i

FI:  G03B21/14 A; G03B21/00 D; G03B21/14 Z; F21S2/00 390; F21V23/00 140; H05B47/16; H05B47/17; H05B47/165; H05B47/105; H05B47/155; H04N9/31 500; H04N5/74 A; F21Y115:30; F21Y113:10

According to International Patent Classification (IPC) or to both national classification and IPC

### B. FIELDS SEARCHED

Minimum documentation searched (classification system followed by classification symbols)

G03B21/00; G03B21/14; F21V23/00; F21Y113/10; F21Y115/30; F21S2/00; H05B47/105; H05B47/155; H05B47/16; H05B47/165; H05B47/17; H04N5/74; H04N9/31

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2016/098281 A1 (NEC CORP.) 23 June 2016 (2016-06-23) paragraphs [0030], [0031], [0041], fig. 1-3, 7 | 1-2, 9 |
| Y | | 4-5, 10-11 |
| Y | WO 2019/208205 A1 (SONY SEMICONDUCTOR SOLUTIONS CORPORATION) 31 October 2019 (2019-10-31) paragraphs [0007], [0044], fig. 3, 8 | 4 |
| Y | WO 2019/017128 A1 (SONY CORPORATION) 24 January 2019 (2019-01-24) paragraphs [0040]-[0055], [0092]-[0095], fig. 8, 16 | 5, 10-11 |
| A | US 2021/0232093 A1 (TEXAS INSTRUMENTS INCORPORATED) 29 July 2021 (2021-07-29) entire text, all drawings | 1-12 |

☑ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 April 2023** | **25 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2023/003591**

| C. | DOCUMENTS CONSIDERED TO BE RELEVANT | |
|---|---|---|
| Category* | Citation of document, with indication, where appropriate, of the relevant passages | Relevant to claim No. |
| A | JP 2018-532152 A (MTT INNOVATION INC.) 01 November 2018 (2018-11-01) entire text, all drawings | 1-12 |
| A | WO 2018/179996 A1 (SONY CORPORATION) 04 October 2018 (2018-10-04) entire text, all drawings | 1-12 |
| A | JP 2014-182269 A (SEIKO EPSON CORP.) 29 September 2014 (2014-09-29) entire text, all drawings | 1-12 |
| A | US 2013/0258293 A1 (TOUCH MICRO-SYSTEM TECHNOLOGY CORP.) 03 October 2013 (2013-10-03) entire text, all drawings | 1-12 |

Form PCT/ISA/210 (second sheet) (January 2015)

International application No.

**PCT/JP2023/003591**

| Patent document cited in search report | | | Publication date (day/month/year) | Patent family member(s) | | | Publication date (day/month/year) |
|---|---|---|---|---|---|---|---|
| WO | 2016/098281 | A1 | 23 June 2016 | US 2017/0339378 A1 paragraphs [0059], [0060], [0070], fig. 1-3, 7 | | | |
| WO | 2019/208205 | A1 | 31 October 2019 | CN | 112005547 | A | |
| WO | 2019/017128 | A1 | 24 January 2019 | US 2020/0169707 A1 paragraphs [0080]-[0095], [0133]-[0136], fig. 8, 16 DE 112018003682 T | | | |
| US | 2021/0232093 | A1 | 29 July 2021 | WO | 2021/178287 | A1 | |
| JP | 2018-532152 | A | 01 November 2018 | JP | 2022-91901 | A | |
| | | | | US | 2017/0099466 | A1 | |
| | | | | US | 2018/0048873 | A1 | |
| | | | | US | 2019/0007660 | A1 | |
| | | | | WO | 2017/059537 | A1 | |
| | | | | CA | 2999353 | A | |
| | | | | CN | 108141574 | A | |
| WO | 2018/179996 | A1 | 04 October 2018 | US | 2020/0014890 | A1 | |
| | | | | CN | 110476120 | A | |
| JP | 2014-182269 | A | 29 September 2014 | (Family: none) | | | |
| US | 2013/0258293 | A1 | 03 October 2013 | TW | 201400918 | A | |
| | | | | CN | 103364971 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018532152 A

- JP 2021026195 A